(19) Europäisches Patentamt
European Patent Office
Office européen des brevets

(11) EP 4 755 188 A1

(12) EUROPEAN PATENT APPLICATION

(43) Date of publication:
**10.06.2026 Bulletin 2026/24**

(21) Application number: **24383343.1**

(22) Date of filing: **09.12.2024**

(51) International Patent Classification (IPC):
***A21D 2/26*** *(2006.01)* ***A21D 13/045*** *(2017.01)*
***A23C 20/02*** *(2025.01)* ***A23L 9/20*** *(2016.01)*
***A23L 11/00*** *(2025.01)* ***A23L 27/60*** *(2016.01)*

(52) Cooperative Patent Classification (CPC):
**A21D 2/264; A21D 2/266; A21D 13/045; A23C 20/025; A23J 3/14; A23J 3/18; A23J 3/20; A23L 9/24; A23L 11/05; A23L 25/30; A23L 27/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Foods For Tomorrow. S.L.**
**08013 Barcelona (ES)**

(72) Inventors:
- **FERNÁNDEZ FARRÉS, Isabel**
  **E-08014 Barcelona (ES)**
- **BEN SASSI, Elyes Renaud**
  **E-08013 Barcelona (ES)**
- **ULAGANATHAN, Vamseekrishna**
  **E-08015 Barcelona (ES)**
- **KANDAR, Ajoy Kumar**
  **E-08030 Barcelona (ES)**
- **SALCEDO SANDOVAL, Jenny Lorena**
  **E-17180 Vilablareix - Girona (ES)**

(74) Representative: **ABG Intellectual Property Law, S.L.**
**Avenida de Burgos, 16D**
**Edificio Euromor**
**28036 Madrid (ES)**

(54) **LOW-FAT VEGAN FOOD PRODUCT**

(57) The present invention relates to a plant-based low-fat or reduced-fat soft food product having a higher protein content; to a process of manufacture of said food product; and to a food product comprising said food product.

EP 4 755 188 A1

## Description

## FIELD OF INVENTION

The present invention relates to a low-fat soft food product. In particular, the invention is directed towards vegan low-fat or reduced-fat spreads, which are designed to offer improved sensory attributes, such as creaminess, while maintaining a higher protein content. These spreads may be used as substitutes for traditional high-fat products such as cream cheese, cocoa/hazelnut-based spreads, etc., and aim to address consumer demand for healthier food options.

## BACKGROUND OF INVENTION

In recent years, there has been a growing demand for healthier food alternatives driven by increased awareness of the health risks associated with excessive fat intake. Traditional soft food products, such as dairy cream cheese, cocoa/hazelnut-based spreads, etc., are high in fat, and calories, contributing to various health issues, including obesity and cardiovascular diseases. Such soft food products are also low in protein content (< 5 % w/w of product) and high in saturated fatty acid contents (>10 % w/w of product). As a result, the food industry has sought to develop low-fat soft food products that offer a healthier alternative through high protein content without sacrificing the sensory properties consumers expect, e.g. taste, texture, and mouthfeel.

A rising interest in vegan foods recently has been spurred by concerns over environmental sustainability, ethical considerations, and dietary preferences such as veganism. Hence, vegan soft food products provide a viable alternative to dairy-based soft food products, appealing to consumers seeking to reduce their reliance on animal-derived ingredients. However, developing low-fat vegan soft food products represents significant technical challenges. Reducing fat content in soft food products often leads to undesirable changes in texture, reducing most importantly the creaminess of the product. Current vegan low-fat soft food products in the market struggle with these issues, often exhibiting inferior mouthfeel, or a lack of richness compared to traditional high-fat products. Additionally, ensuring that vegan ingredients function as effective fat replacers without compromising the product's nutritional and sensory profile remains a key challenge in the industry. There have been some attempts to provide low-fat soft food products utilizing additives such as hydrocolloids acting as thickeners, gums, etc., to provide richness or creaminess in mouthfeel. But most of these additives are not "clean label" and are poorly perceived by the consumer.

Accordingly, there is a need for an improved vegan low-fat soft food product that offers consumers a healthier, low-fat alternative, while maintaining the taste, texture, and functionality of traditional soft food products. The present invention addresses these and other limitations in the field.

## SUMMARY OF INVENTION

The inventors in this current invention have surprisingly found that a low-fat soft food product can be obtained without using any hydrocolloids or gums but utilizing a vegan protein ingredient that provides a rich and creamy mouthfeel, thereby functioning as an effective fat substitute in soft food products.

Thus, in one aspect, the invention relates to a vegan food product comprising:

i) from 10 wt.% to 25 wt.% of a vegan protein isolate having a solubility between 40% to 70%, wherein the solubility is determined by dispersing 1.0 wt% of said protein ingredient in water with 0.5 wt% NaCl at 70°C and pH 7; and
ii) optionally a fat; and
iii) water,

wherein

the weight percentages are expressed with respect to the total weight of the food product; the pH of the food product is greater than 5; and
the viscosity of the food product is in the range of 0.02 to 25 Pa·s when subject to shear rate of 50 $s^{-1}$ at 22°C.

In a second aspect, the invention relates to a process for the manufacture of a vegan food product according to the first aspect, wherein the process comprises:

a) dispersing the vegan protein ingredient in water;
b) if necessary, adjusting the pH of the dispersion obtained in step a) to more than 5;
c) optionally adding fat;
d) mixing while heating at 70°C to 80 °C for 5 to 10 minutes at 500 to 1000 RPM and then at 80°C to 90°C for 5 to 10

minutes at 500 to 1000 RPM; and

e) cooling the mixture obtained after step d) to 15 to 25 °C.

In a third aspect the invention realties to a vegan food product obtainable by the process according to the second aspect.

In a fourth aspect, the invention relates to a process for the manufacture of a dry food product comprising:

i) providing the vegan product according to the first or third aspect, and

ii) drying the vegan product provided in step i) to a water content of less than 35 wt.%, with respect to the total weight of the dry food product.

In a fifth aspect the invention relates to a dry food product obtainable by the process of the fourth aspect, preferably selected from a muffin and a bread-like product.

## DESCRIPTION OF THE FIGURES

Figure 1. Comparison of sensory firmness score with texture analyzer (TA) and rheological (rheo) profile parameters for low-fat vegan food products using different plant-based protein isolates at 20% concentration and 1% NaCl at pH 7: (a) sensory firmness score and Work of Shear (g.s) from TA, (b) sensory firmness score and yield stress ($\sigma_y$) (Pa) (rheo), (c) sensory firmness score and storage modulus (G') (Pa) (rheo).

Figure 2. Relation between sensorial attributes and protein ingredient concentration for Faba 1. The dotted lines represent the fit. a) firmness score vs. protein ingredient concentration, b) creaminess score vs. protein ingredient concentration, c) graininess score vs. protein ingredient concentration. The equations presented in the plots are used for predicting the respective sensorial attribute scores

Figure 3. Comparison of sensory firmness score with texture analyzer (TA) and rheological (rheo) profile parameters for low-fat vegan food products based on Faba 1 at various weight concentrations with 1% NaCl at pH 7: (a) sensory firmness score and Work of Shear (g.s) from TA, (b) sensory firmness score and yield stress ($\sigma_y$) (Pa) (rheo) , (c) sensory firmness score and storage modulus (G') (Pa) (rheo).

Figure 4. Relation between sensorial attributes and pH for Faba 1 at 20% protein ingredient concentration. The dotted lines represent the fit. a) firmness score vs. pH, b) creaminess score *vs.* pH, c) graininess score *vs.* pH. The equations presented in the plot are used for predicting the respective sensorial attribute scores.

Figure 5. Comparison of sensory firmness score with texture analyzer (TA) and rheological (rheo) profile parameters for low-fat vegan food products based on faba 1 (20% concentration) at various pH with 1% NaCl: (a) sensory firmness score and Work of shear from TA, (b) sensory firmness score and yield stress ($\sigma_y$) (Pa) (rheo), (c) sensory firmness score and storage modulus (G') (Pa) (rheo).

Figure 6. Comparison of sensory firmness score with texture analyzer (TA) and rheological (rheo) profile parameters for low-fat vegan food products based on Faba 1 (20% concentration with 1% NaCl and pH 7) with various additives such as sunflower oil, shea butter and sugar: (a) sensory firmness score and Work of Shear from TA, (b) sensory firmness score and yield stress ($\sigma_y$) (Pa) (rheo), (c) sensory firmness score and storage modulus (G')(Pa) (rheo).

Figure 7. Comparison of sensory firmness score with texture analyzer (TA) and rheological (rheo) profile parameters for all food products studied: (a) sensory firmness score and Work of shear from TA, (b) sensory firmness score and yield stress ($\sigma_y$) (rheo), (c) sensory firmness score and storage modulus G' (rheo).

## DESCRIPTION OF INVENTION

*Plant-based low-fat soft food products*

In the first aspect the current invention relates to a vegan food product comprising:

i) from 10 wt.% to 25 wt.% of a vegan protein isolate having a solubility of from 40% to 70%, wherein the solubility is

determined by dispersing 1.0 wt% of said protein ingredient in water with 0.5 wt% NaCl at 70°C and pH 7;
ii) optionally a fat; and
iii) water,

wherein

the weight percentages are expressed with respect to the total weight of the food product; the pH of the product is greater than 5; and
the viscosity of the food product is from 0.02 to 25 Pa·s when subjected to a shear rate of 50 $s^{-1}$ at 22 °C.

The term "vegan" as used herein refers to a product, in particular a food product, containing no components from animal origin, such as pesco-, ovo-, lacto-, and meat-based sources, and comprising at least a component from vegan sources, such as plant sources, in particular from legumes (e.g. fabas, soybeans, lentils, peas, chickpeas,), nuts, vegetables, wheat, whole grains, among others, and yeasts; preferably from plant sources; more preferably from fabas.
The term "food product" as used herein refers to a product which is intended and is suitable for ingestion of a human or an animal and provides at least one nutrient to the human or animal.
The food product of the first aspect of the invention has a viscosity of from 0.02 to 25 Pa s when subjected to a shear rate of 50 $s^{-1}$ at 22 °C, preferably of from 0.05 to 15 Pa s when subjected to a shear rate of 50 $s^{-1}$ at 22 °C. Such materials that could deform and flow would offer some resistance to the applied shear stress, which is known as viscosity. The viscosity can be quantified using viscometer or a rheometer and it is ratio between applied shear stress and the rate of deformation the material undergoes, in particular using the method disclosed in the examples. Food products having a viscosity falling within these range are soft food product, i.e. with a pliable, semi-solid, or fluid consistency that allows for easy spreading. These products are generally characterized by a low resistance to deformation under moderate pressure.
Viscosity is defined as proportionality constant between the shear stress and shear rate.
Based on rheological characterization, fluids product are basically classified as Newtonian or non- Newtonian product. For Newtonian product, viscosity does not change with the applied shear rate. Non-Newtonian products are those where the viscosity varies as a function of the applied shear rate or shear stress. Non-Newtonian fluids are dependent on shear rate and temperature. Viscosity, as used herein, is expressed in terms of the shear rate and temperature at which the product is tested, which are 50 $s^{-1}$ and 22 °C, respectively.
The viscosity of the vegan soft food products may be determined using the rheology technique described in the section Rheological analysis of soft food products in Example 4.3. The viscosity is determined at 22 °C and at a shear rate of 50 $s^{-1}$ from the viscosity vs shear rate flow curve data while shear rate is increasing. After loading the sample into the rheometer geometry (sandblasted plate-plate geometry-PP25/S) in a 1.5 mm gap, a constant pre-shear (100 $s^{-1}$) is applied to the sample for 2 min and waited for 2 min in order to create a controlled initial state in the sample to ensure the same shear history for all samples. The rotational shear test is then performed with shear rates from 0.01 $s^{-1}$ to 200 $s^{-1}$, in logarithmically spaced steps with 7 points per decade. Each shear step is maintained for a duration of 20 s. Rheometer software (RheoCompass) allows one to choose desire steps of shear rate for the flow curve and it involves a smooth incremental transition from one shear rate to the next shear rate. The viscosity vs shear rate data are recorded and the viscosity at a shear rate of 50 $s^{-1}$ is determined from the plot/graph. The study is performed three times with the newly loaded samples and the viscosity is determined by averaging them..
Food products of the first aspect of the invention may include, but are not limited to, sauces, spreads, dips, dressings, pastes, and creams; preferably cheese spread, hummus, nut spread, pesto and mayonnaise.
The food product of the invention comprises a vegan protein isolate having a solubility of from 40% to 70% and wherein said solubility is determined by dispersing the said vegan protein ingredient of 1.0 wt% of total protein concentration in water with 0.5 wt% NaCl at 70 °C and pH 7. In particular, the solubility is determined as described in the examples.
The term "protein isolate" refers to a protein ingredient comprising a mixture of proteins obtained from defatted plant based grains, legumes, vegetables or yeasts, by removing most of the fat fraction thereof, yielding a product having at least 85 wt.% protein with respect to the total weight of the protein isolate, preferably at least 90 wt.%, even more preferably from 90 wt.% to 95 wt.%. Thus, the protein isolate comprises at least 85 wt% of proteins with respect to the total weight of the protein isolate, preferably at least 90 wt.%, even more preferably from 90 wt.% to 95 wt.%
The vegan food product of the invention comprises from 10 wt.% to 25 wt.% of protein isolate with respect to the total weight of the product. Preferably, the vegan food product of the invention comprises from 10 wt.% to 20 wt.% of protein isolate with respect to the total weight of the product. More preferably, the vegan food product of the invention comprises from 15 wt.% to 20 wt.% of protein isolate with respect to the total weight of the product.
Preferably, the vegan protein isolate is selected from the group consisting of legume protein isolates, including from faba beans, soybeans (soy), peas, lentils, chickpeas, black beans, kidney beans, mung beans, pinto beans, lupin; grain protein isolates, including from maize/com meal, millet, rice, wheat/seitan (including gluten), barley, oat, spelt, and

teff; seed protein isolates, including from buckwheat, quinoa, amaranth, chia, flax, hemp, sunflower, and pumpkin; nut protein isolates, including from walnuts, almonds, and cashews; bacterial protein isolates, including spirulina; vegetable protein isolates, including from broccoli, spinach, asparagus, artichoke, potato, sweet potato, and brussels sprouts; fruit protein isolates, including from guava, cherimoyas, blueberries, blackberries, nectarines, and bananas; fungal protein isolates, including mycoprotein; yeast protein isolates; and mixtures thereof; more preferably wherein the vegan protein isolate is selected from the group consisting of faba protein isolate, soy protein isolate, pea protein isolate, potato protein isolate, maize protein isolate and mixtures thereof; more preferably wherein the vegan protein isolate is selected from the group consisting of faba protein isolate, soy protein isolate, pea protein isolate, potato protein isolate, and mixtures thereof; still more preferably wherein the vegan protein isolate is a faba protein isolate.

The vegan protein isolate has a solubility of from 40% to 70%, wherein the solubility is determined by dispersing the said vegan protein ingredient of 1.0 wt% of total protein concentration in water with 0.5 wt% NaCl at 70 °C and pH 7; preferably a solubility of from 40% to 60%, more preferably of form 40% to 50%. The solubility of the vegan protein ingredient may be determined following the procedure described in the examples. In particular, the solubility is determined by preparing a dispersion of the vegan protein ingredient in water at a concentration of 1.0 wt% with respect to the total weight of the dispersion along with 0.5 wt% of NaCl, adjusting the pH to 7 (using if required 1 M hydrochloric acid or 1 M sodium hydroxide), stirring for 1 hour at room temperature. The dispersion is then placed in the water bath set at 70°C for an hour. The dispersion is then allowed to reach room temperature (approximately 20 to 25 °C). The dispersion is centrifuged and the supernatant is filtered through a filter having a pore size of 0.45 μm, The concentration of protein in the filtrate may be quantified by any suitable method in the art, such as the Dumas method [Chiacchierini, E., et al. "Milk soluble whey proteins: fast and precise determination with Dumas method." Analytical letters 36.11 (2003): 2473-2484], which is based on the combustion of the sample, and a subsequent purification of the gases obtained and the measurement of the thermal conductivity of nitrogen gas which is later translated into protein content, as described in the examples. The solubility (in %) is obtained by dividing the concentration of the protein in the filtrate by the total protein concentration in the dispersion according to Equation 1:

$$Solubility\ (\%) = \frac{Concentration\ of\ protein\ in\ filtrate}{Total\ protein\ concentration\ in\ the\ dispersion} \qquad \text{Equation 1}$$

The expression "by dispersing 1.0 wt% of said plant-based protein isolate in water with 0.5 wt% NaCl at 70 °C and pH 7" as used herein refers to a dispersion of the plant-based protein ingredient in water, preferably distilled water, comprising 0.5 wt% of NaCl, which may further comprise a pH adjusting agent so that the pH of the dispersion is 7.0, such as hydrochloric acid or sodium hydroxide, and which has been stirred at room temperature for about 1 hour. Then the dispersion is placed is sealed in a bottle and placed in water bath set at 70°C for one hour. Then the dispersion is removed from the water bath and cooled to room temperature.

The volume weighted mean diameter D[4,3] is also known as the De Broucker mean and is a measure of particle size. It represents the center of mass for frequency distribution in units of volume, and it is commonly used to represent the mean diameter of a particle within a polydisperse system. The De Broucker mean is defined in terms of the moment-ratio system according to Equation 2,

$$D[4,3] = \frac{\sum n_i D_i^4}{\sum n_i D_i^3} \qquad \text{Equation 2}$$

where $n_i$ is the frequency of occurrence of particles in size class i, having a mean diameter $D_i$.

Another measure of particle size is D90, which is the particle diameter point in microns below which 90 vol.% of the particles are contained.

D[4,3] and D90 may be determined using laser diffraction techniques [Xu, Renliang. Particle characterization: light scattering methods. Vol. 13. Springer Science & Business Media, 2001]. The D[4,3] and D90 of the vegan protein isolates may be measured by Static Light Scattering (SLS) of a dispersion of said vegan protein ingredient in distilled water at a concentration of 1.0 wt.% of vegan protein ingredient with respect to the total weight of the dispersion along with 0.5 wt% of NaCl and at pH 7.0. Hydrochloric acid or sodium Hydroxide may be used to adjust the pH, particularly 1 M HCl or 1 M NaOH.

The vegan protein isolate dispersions are stirred for 1 hour at room temperature °C (25 °C) and the particle sixe is determined by SLS. SLS is a technique that measures the intensity of the scattered light of dispersed particles illuminated by a laser beam. Particles are hit by a red beam light (λ=633 nm) and a blue beam light (λ=470 nm) and diffract these in all

directions. Large particles diffract light on smaller angles with high intensity, whereas small particles diffract light on wider angles with lower intensity. Detailed experimental protocols to determine the D[4,3] and D90 of the plant-proteins are provided in the examples.

Preferably, the vegan protein isolate has a volume weighted mean diameter D[4,3] of from 10 to 130 μm, wherein said volume weighted mean diameter D[4,3] is determined by dispersing 1 wt.% of the vegan protein ingredient in water with 0.5 wt% NaCl at 25 °C and pH 7; more preferably, the vegan protein isolate has a volume weighted mean diameter D [4,3] of from 10 to 90 μm.

In a particular embodiment, the vegan protein isolate has a D90 particle size of from 30 to 250 μm, preferably from 30 to 200 μm, wherein said D90 particle size is determined by dispersing 1 wt.% of the vegan protein ingredient in water with 0.5 wt% NaCl at 25 and pH 7.

The protein isolates used in the present invention are commercially available or obtained through a common extraction process well known for the skilled person, for examples extraction processes comprising one or more of the following steps: alkali solution extraction, separation, acidification, washing, neutralization, heat treatment, cooling and spray drying. In particular, the extraction process may comprise the following steps:

- The vegan grains or legumes may be cleaned, cracked, and dehulled to remove the outer shell of the bean.
- Defatting: The defatting process removes the oil from the cleaned, cracked, and dehulled non-dairy grains or legumes, which helps to concentrate the protein. This is commonly done using hexane, but it can also be carried out by mechanical methods such as pressing or centrifugation.
- Separation: When a solvent, such as hexane, is used in the defatting step, the resulting mixture of oil and solvent is separated from the remaining solids (the defatted fraction) by centrifugation.
- Extraction: The defatted fraction obtained from the previous steps and water are mixed at a ratio of 1:2 to 1:9 at a temperature of 10 to 40 °C. An alkali solution (aqueous sodium hydroxide or aqueous potassium hydroxide) is added to adjust the pH to from 7.0 to 9.0, then the solution is optionally stirred at medium speed for 15 to 30 min. The alkali-extracted liquid is then separated from the insoluble residues using a filter press or centrifuge, preferably by centrifugation. The resulting solution contains the dissolved proteins, whilst the solid residue is discarded.
- Acidification: The protein extract is then acidified to precipitate and form curds at a pH near the isoelectric point (pH 4.2 - 4.8). The precipitated proteins form a curd and are then separated by mechanical decanting or centrifugation.
- Washing: the curd is washed with water to remove any remaining impurities, such as residual alkaline solution.
- Neutralization: The washed curds precipitated from the acidic solution are then adjusted to 7.0 to 9.0. A slurry is obtained.
- Separation: The slurry obtained in the previous step could go through a step of separation based on particle size using centrifugation or filtration allowing to separate the large insoluble protein particle from the soluble ones. A mesh of 60 to 100 could be used to separate small protein particles from large protein particles when using filtration. The filtrate is then enriched in soluble particles, whereas the retentate is enriched in larger particles which are poorly soluble. The filtrate is used in the next step. Alternatively, the separation could be performed by mechanical or centrifugal filtration.
- The filtrate separated in the previous step is heat treated at a temperature of 70 to 98 °C for 5 to 10 min and cooled to 60 to 70 °C by a heat exchange system.
- Spray-drying: The slurry obtained in the previous step is finally spray-dried to obtain a protein ingredient with no more than 10% humidity.

The food product of the invention optionally comprises a fat. When said fat is present, its concentration in the food product is up to 15 wt.% of fat with respect to the total weight of the food product, preferably from 5 wt.% to 15 wt.%, still more preferably from 10 wt.% to 15 wt.%.

The term "fat" or "oil" as used herein comprises of a triglyceride compound composed of one glycerol molecule esterified with three fatty acids. Typically, the hydrocarbon chain length of the fatty acid is from 8 to 26 carbon atoms, preferably from 12 to 24 carbon atoms. The fatty acids could be broadly classified as saturated fatty acids - have a linear hydrocarbon chain in their molecular structure with no double or triple bonds, and unsaturated fatty acids - having a branch with one or more double bonds in one or more locations of the hydrocarbon chain, typically from1 to 6 double bonds, preferably 1 or 2 double bonds. The fatty acids of the fat used in the food product of the present invention may be unsaturated, saturated or a mixture thereof.

Preferably, the fat is selected from the group consisting of sunflower oil, shea butter, coconut fat or coconut oil, avocado oil, grape seed oil, olive oil, peanut oil, safflower oil, sesame oil, corn oil, canola oil, soybean oil, linseed oil, hemp seed oil, and almond oil, cocoa butter, palm fat, hydrogenated palm kernel oil, vegetable margarine and mixtures thereof. More preferably the fat is selected form the group consisting of sunflower oil, shea butter, and mixtures thereof.

In one embodiment, the food product of the invention is devoid of fat, i.e. the fat content is 0 wt.%.

As used herein, the term "devoid" refers to as being substantially free of the corresponding ingredient, i.e. less than 1 wt.% of the corresponding ingredient with respect to the total weight of the food product, preferably less than 0.5

wt.%, even more preferably less than 0.1 wt.%, even more preferably 0 wt.%.

The food product of the invention also comprises water. In a preferred embodiment, the food product of the invention comprises from 55 wt.% to 89 wt.% of water, wherein the weight percentages are expressed with respect to the total weight of the food product; preferably from 60 wt.% to 80 wt.%.

The pH of the vegan food product of the invention is greater than 5. Preferably, the vegan food product of the invention has a pH of 5.5 to 7, more preferably of 6 to 7, still more preferably of from 6.5 to 7. The pH of the food product may be adjusted, if necessary, by adding suitable acids or bases. Examples of suitable acids are citric acid, acetic acid, malic acid, succinic acid, tartaric acid, hydrochloric acid, lactic acid, and mixtures thereof, preferably citric acid, more preferably wherein the source of citric acid is lemon juice. Examples of suitable bases are sodium hydroxide, sodium bicarbonate, sodium carbonate potassium hydroxide, potassium carbonate, and mixtures thereof. The pH can be determined by use of a pH-meter, as known by the skilled person.

The food product of the invention may be devoid of salt or may further comprise from 0.1 wt.% to 5 wt% of a salt selected from the group consisting of NaCl, KCl and mixtures thereof.

The food product of the invention may further comprise one or more ingredients selected from the group consisting of colorants, flavoring agents, vitamins, and minerals.

Examples of colorants are Annatto, beetroot powder, caramel color, chlorophyll, carotenoids, Turmeric powder, and Spirulina.

Examples of flavoring agents are herbs and spices, flavor components, extracts, essential oils, sweeteners, and preservatives.

In particular, the food product of the invention may also comprise one or more sweeteners, such as sugar (i.e. sucrose), fructose, galactose, glucose, lactose, maltose, saccharin, cyclamate, aspartame, isomalt, mannitol, sorbitol, xylitol, sucralose, stevia, acefsulfame potassium, and mixtures thereof, preferably sucrose. In a particular embodiment, the sweetener(s) is(are) present in the food product in a concentration of up to 15 wt%, preferably from 5 wt% to 15 wt%. Preferably, the sweetener is sucrose.

Examples of vitamins are, Vitamin A, B Vitamins, Vitamin C, Vitamin D, Vitamin E and Vitamin K.

Examples of minerals are iron, magnesium, calcium, potassium, selenium, and zinc.

In a particular embodiment, the vegan food product of the invention comprises:

i) from 15 wt.% to 20 wt.% of a faba protein isolate having a solubility of from 40% to 60%, wherein the solubility is determined by dispersing 1.0 wt% of said protein isolate in water with 0.5 wt% NaCl at 70 °C and pH 7;
ii) from 5 wt.% to 15 wt% of a fat selected from sunflower oil, shea butter and mixtures thereof;
iii) from 60 wt.% to 80 wt% of water; and
iv) optionally from 5 to 15 wt% of a sweetener;

wherein the weight percentages are expressed with respect to the total weight of the food product. Preferably wherein the sweetener is present, more preferably wherein the sweetener is sucrose.

In a particular embodiment, the food product of the invention is devoid of hydrocolloids, in particular, the food product of the invention is devoid of hydrocolloids selected from the group consisting of agar, carrageenan, guar gum, locust bean gum, xanthan gum, pectin, alginate and mixtures thereof. Preferably, the product of the invention is devoid of agar.

Agar (classified as E406 - food additive) is a polysaccharide which is based on galactose, derived from red algae. The polysaccharides consist of agarose and agaropectin which are polysaccharides based on galactose. Agar is used in various food products as gelling agent. Depending on the source of seaweed the agarose and agaropectin ratios of agar and its molecular chain lengths could vary affecting the gel strength at a given concentration [Rao, A. V., and Inaam A. Bekheet. "Preparation of agar-agar from the red seaweed Pterocladia capillacea off the coast of Alexandria, Egypt." Applied and environmental microbiology 32.4 (1976): 479-482].

Carrageenans are a family of sulphated polysaccharides mainly made up of alternating 3-linked β-D-galactopyranose (G-units) and 4-linked α-D-galactopyranose (D-units) or 4-linked 3,6-anhydro-α-D-galactopyranose (DA-units), forming the disaccharide repeating unit of carrageenans. Carrageenans contain 15-40% ester-sulfate content. Examples of carrageenans are ι-carrageenan, κ-carrageenan, δ-carrageenan, α-carrageenan, μ-carrageenan, β-carrageenan, v-carrageenan, λ-carrageenan, and θ-carrageenan.

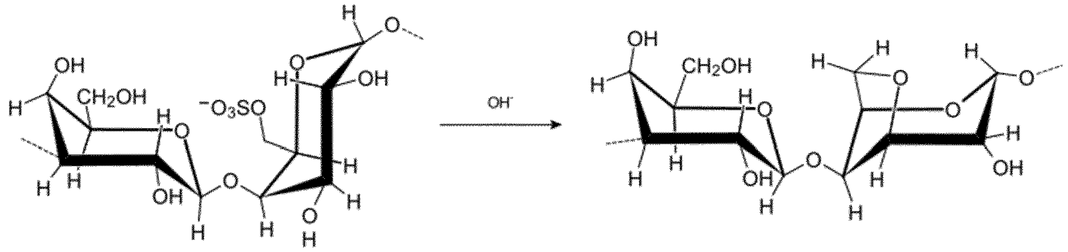


γ–carrageenan β–carrageenan

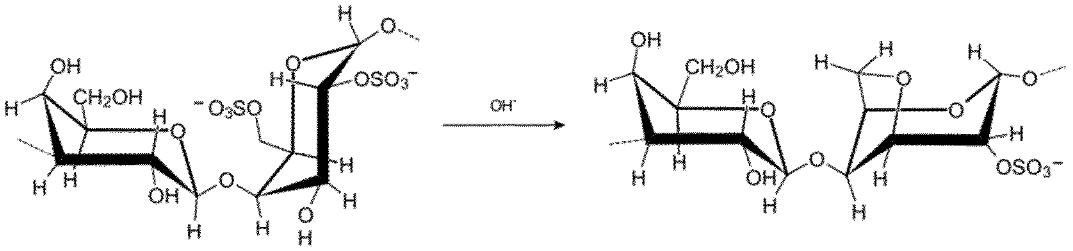


δ–carrageenan α–carrageenan

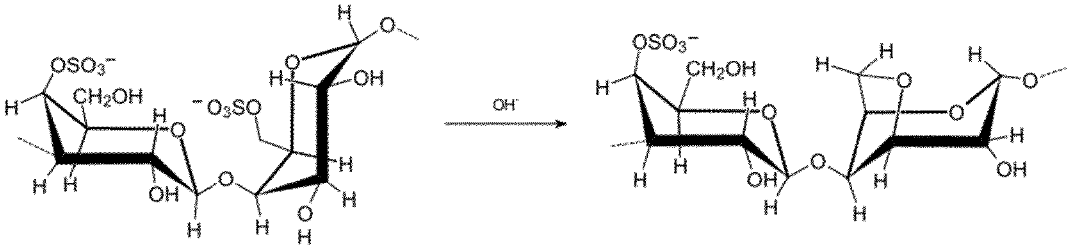


μ–carrageenan κ–carrageenan

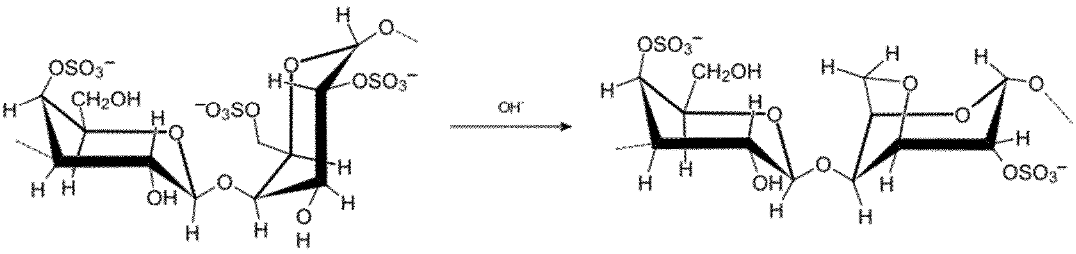


ν–carrageenan ι–carrageenan

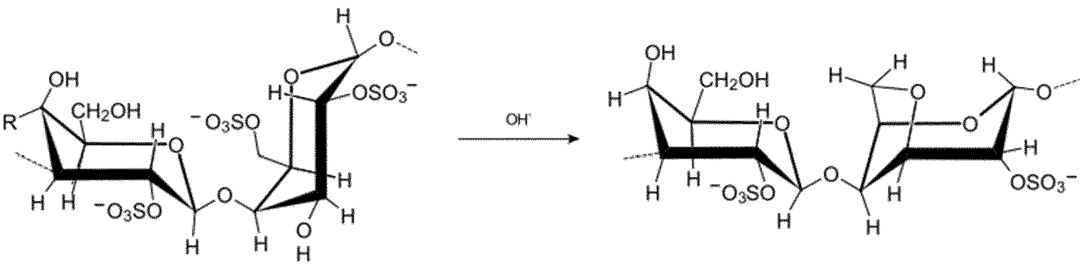


λ–carrageenan θ–carrageenan

Guar gum is an endo-polysaccharide composed of the sugars galactose and mannose. The backbone is a linear chain of β 1,4-linked mannose residues to which galactose residues are 1,6-linked at every second mannose, forming short side-branches.

Locust bean gum (LBG, carob gum, carob bean gum, carobin, E410) is a galactomannan vegetable gum extracted from the seeds of the carob tree. It is a polysaccharide composed of galactose and mannose units combined through glycosidic linkages.

Xanthan gum is a polysaccharide composed of pentasaccharide repeat units, comprising glucose, mannose, and glucuronic acid in the molar ratio 2:2:1.

Pectin is a heteropolysaccharide, a structural acid contained in the primary lamella, in the middle lamella, and in the cell walls of terrestrial plants. The principal chemical component of pectin is galacturonic acid.

Alginate is a salt of alginic acid, generally sodium and/or calcium salt. Alginic acid is a polysaccharide having the structure of a linear copolymer with homopolymeric blocks of (1-4)-linked β-D-mannuronate (M) and α-L-guluronate (G) residues, respectively, covalently linked together in different sequences or blocks. The monomers may appear in homopolymeric blocks of consecutive G-residues (G-blocks), consecutive M-residues (M-blocks) or alternating M and G-residues (MG-blocks). α-L-guluronate is the C-5 epimer of β-D-mannuronate.

The vegan food product of the invention has suitable firmness, creaminess and graininess properties.

"Firmness" refers to the force required to compress the food product between the tongue and the palate. Firmness may be scored using a scale of 0 to 15, being 0 the less firm product and 15 the most firm product, for example by means of a sensory panel, as explained in the examples, or by any other method known in the art.

"Creaminess" refers to the sensation of fullness in mouth when eating the food product, associated with a fatty feeling in mouth that melts slowly. Research has shown that the perception of creaminess is influenced by factors like firmness and smoothness. Creaminess may be scored using a scale of 0 to 15, being 0 the less creamy product and 15 the most creamy product, for example by means of a sensory panel, as explained in the examples O by any other method known in the art. However, comparing creaminess across different products can be challenging, as each product varies in terms of firmness. To address this the creaminess scores can be normalized against firmness (i.e. creaminess/firmness). In particular, the food product of the invention has a normalised creaminess (i.e. creaminess/ firmness) >_ 1.5, wherein the creaminess and firmness may be determined as previously explained.

"Graininess" refers to perception of small, distinct particles in the food product's texture, which can be felt during chewing or as the food product dissolves in the mouth. It indicates a lack of smoothness, where the texture may feel coarse or gritty rather than uniformly smooth. Graininess may be scored using a scale of 0 to 15, being 0 the less grainy product and 15 the most grainy product, for example by means of a sensory panel, as explained in the examples, as also explained in the examples, or by any other method known in the art. In particular, the food product of the invention has a graininess ≤ 1.8.

In particular, the food product of the invention has a normalised creaminess (i.e. creaminess/ firmness) >_ 1.5 and a graininess ≤ 1.8.

<u>Process for manufacturing plant-based protein-rich low-fat soft food product</u>

In the second aspect, the invention relates to the process for the manufacture of the vegan food product according to the first aspect, wherein the process comprises:

a) dispersing the vegan protein isolate in water;
b) if necessary, adjusting the pH of the dispersion obtained in step a) to more than 5;
c) adding the fat, when the vegan food product comprises fat;
d) mixing while heating at 70°C to 80 °C for 5 to 10 minutes at 500 to 1000 RPM and then at 80°C to 90°C for 5 to 10 minutes at 500 to 1000 RPM; and
e) cooling the mixture obtained after step d) to 15 to 25 °C.

The first step of the process, step a), is dispersing the vegan protein isolate in water. Preferably, this step is carried out at a temperature of from 15 to 30 °C. This step may be carried out, for example, by using conventional food processing means such as using a food processor (e.g. bowl chopper, continuous mixer, high-shear batch mixer, emulsion mill, mincer/grinder, stand mixer, blender).

Step b) of adjudging the pH of the dispersion obtained in step a) to more than 5 only needs to be carried out if the pH of said dispersion is lower or equal to 5. Preferably, the pH is adjusted to from 5.5 to 7, more preferably from 6 to 7, even more preferably to from 6.5 to 7. The pH may be adjusted by adding any suitable acid or base as previously defined. Preferably, step b) is carried out with mixing at a temperature of 15 to 30 °C and at 500 to 1000 RPM, even more preferably 500 to 800 RPM. Preferably, the mixing is carried out for at least 5 minutes, more preferably for 5 to 30 min, still more preferably for 5 to 10 minutes. This step may be carried out, for example, by using conventional food processing means such as using a food processor (e.g. bowl chopper, continuous mixer, high-shear batch mixer, emulsion mill, mincer/-grinder, stand mixer, blender).

Step c) is optional. Step c) is carried out when the vegan product of the invention comprises fat. Step c) is not

carried out when the vegan product of the invention does not comprise fat. Step c) is carried out either after step a) (when step b) has not been carried out because the pH did not need to be adjusted) or after step b) (when step b) has been carried out because the pH needed to be adjusted). Step c) is adding the fat to the protein dispersion. Preferably, step b) is carried out with mixing at a temperature of 15 to 30 °C. Preferably, the mixing is carried out for at least 3 minutes, more preferably for 3 to 30 min, still more preferably for 3 to 5 minutes. This step may be carried out, for example, by using conventional food processing means such as using a food processor (e.g. bowl chopper, continuous mixer, high-shear batch mixer, emulsion mill, mincer/grinder, stand mixer, blender).

Step d) is carried out either after step a) (when step b) has not been carried out because the pH did not need to be adjusted and step c) is not carried out because the vegan food product of the invention does not comprise fat), after step b) (when step b) has been carried out because the pH needed to be adjusted and step c) is not carried out because the vegan food product of the invention does not comprise fat), or after step c) (when the vegan food product of the invention comprised fat) has been performed. Step d) is mixing the dispersion (obtained in step a) (when step b) has not been carried out because the pH did not need to be adjusted and step c) is not carried out because the vegan food product of the invention does not comprise fat), obtained in step b) (when step b) has been carried out because the pH needed to be adjusted and step c) is not carried out because the vegan food product of the invention does not comprise fat), or obtained in step c) (when the vegan food product of the invention comprised fat), while heating at 70°C to 80°C for 5 to 10 minutes at 500 to 1000 RPM and then at 80°C to 90°C for 5 to 10 minutes at 500 to 1000 RPM. Preferably, the mixing in step d) is carried out at 500 to 800 RPM. This step may be carried out, for example, by using conventional food processing means such as using a food processor (e.g. bowl chopper, continuous mixer, high-shear batch mixer, emulsion mill, mincer/-grinder, stand mixer, blender).

If salt or any additional ingredient is present in the vegan food product of the invention, this ingredient may be added before step d) (and after step a)).

Step e) is cooling the mixture obtained after step d) to 15 to 25 °C, preferably followed by cooling further to 4 to 7 °C. Preferably, step e) comprises placing the mixture obtained after step d) in a bag prior to cooling. Step e) can be carried out using any suitable cooling means, such as cooling in cold/ice water baths, chilling rooms, refrigeration, spray chilling, immersion chilling, batch/continuous air coolers, direct contact chillers, vacuum cooling.

In a third aspect, the invention relates to a vegan food product obtainable by the process according to the second aspect.

In a further aspect, the invention relates to a process for the manufacture of a dry food product comprising:

i) providing the vegan food product according to the first or third aspect, and
ii) drying the vegan food product provided in step i) to a water content of less than 35 wt.%, with respect to the total weight of the dry food product.

The term "food product" or "food" or "food composition" as used herein refers to a product which is intended and is suitable for ingestion of a human or an animal and provides at least one nutrient to the human or animal.

The term "dry" when characterizing the food product, refers to a product having less than 35wt.% of water with respect to the total weight of the food product, preferably less than 33 wt.%.

The drying of step ii) may be carried out by any conventional means such as electric convection oven, microwave oven, food dehydrator, air fryers etc.

The drying of step ii) is carried out until the water content of the product is less than 35 wt.%, with respect to the total weight of the dry food product, preferably less than 33 wt.%.

The water content may be determined by conventional methods known by the skilled person such as Karl-Fisher titration, moisture analysis by weight of product before and drying the product using a hot oven or simply a moisture analyser.

In a further aspect, the invention relates to a dry food product obtainable by the process the previous aspect, preferably wherein said dry food product is selected from a muffin, a bread-like product and cous-cous.

The term "bread-like product" as used herein refers to a food item such as bread, muffins, buns, and similar products that exhibit a moist, tender crumb structure while maintaining cohesiveness and elasticity. Such products are typically obtained through processes such as baking, microwaving, steaming etc.

The following examples represent specific embodiments of the present invention. They do not intend to limit in any way the scope of the invention defined in the present description.

## Examples

### Example 1. Extraction of plant-based protein isolates.

The vegan protein isolates (PI) are extracts rich in protein content with at least 85% protein w/w. In the following

examples, the extraction of PI from soybeans, peas, faba is presented.

*Example 1.1. Extraction process of soy protein ingredient Soy 1*

Soy protein ingredient Soy 1is obtained through a process that comprises alkali solution extraction, separation, acidification, washing, neutralization, heat treatment, cooling and spray drying. The soy protein ingredient has at least 90.0 wt.% protein on a dry basis, i.e. it is a soy protein isolate. The detailed extraction process is as follows: The soybeans are first cleaned, cracked, and dehulled to remove the outer shell of the bean. Defatting: The defatting process removes the oil from the cleaned, cracked, and dehulled soybeans, which helps to concentrate the protein. This is done using hexane. Separation: The resulting mixture of oil and solvent is separated from the remaining solids (the defatted soybean) by centrifugation. Extraction: The defatted soybean fraction obtained from the previous steps and water are mixed in the weight ratio 1:6 at a temperature of approximately 20°C. An alkali solution (sodium hydroxide) is added to adjust the pH to 8.3. The alkali-extracted solution is then separated from the insoluble soybean residues using a centrifuge. The resulting solution contains the dissolved proteins, whilst the solid residue is discarded. Acidification: The extract obtained from the previous step is then acidified to precipitate and form curds at a pH near the isoelectric point of pH 4.7 (pH 4.5 - 4.8). The precipitated proteins form a curd and are then separated by centrifugation. Washing: the curd is washed with water to remove any remaining impurities, such as residual alkaline solution. Neutralization: The washed curds precipitated from solution are then adjusted to pH 8.0. Heating and Spray-drying: The slurry is then heat treated at a temperature of 120°C for 3 min using steam injection and cooled to 60°C. The slurry is finally spray-dried to obtain a soy protein ingredient with no more than 7% humidity, with a protein content of 90% in dry matter.

*Example 1.2. Extraction process of pea protein ingredient Pea 1*

Pea protein ingredient Pea 1is obtained following the extraction process described below. The pea protein ingredient has at least 90.0 wt. % protein on a dry basis, i.e. it is a pea protein isolate. The detailed extraction process is as follows: The yellow peas are first cleaned, cracked, and dehulled to remove the outer shell of the bean. Extraction: The dehulled pea obtained from the previous steps and water are mixed in the weight ratio 1:5 to 1:8 at a temperature of approximately 20°C. An alkali solution (sodium hydroxide) is added to adjust the pH to 8.5. The alkali-extracted solution is then separated from the insoluble pea residues using a centrifuge. The resulting solution contains the dissolved proteins, whilst the solid residue is discarded. Acidification: The extract obtained from the previous step is then acidified to precipitate and form curds at a pH near the isoelectric point of pH 4.5 (pH 4.4 - 4.6). The precipitated proteins form a curd and are then separated by centrifugation. Washing: the curd is washed with water to remove any remaining impurities, such as residual alkaline solution. Neutralization: The washed curds precipitated from solution are then adjusted to pH 7.0. Heating and Spray-drying: The slurry is then heat treated at a temperature of 120°C for 3 min using steam injection and cooled to 60°C. The slurry is finally spray-dried to obtain a pea protein ingredient with no more than 7% humidity with total protein content of 90 % in dry matter.

*Example 1.3. Extraction process of pea protein ingredient Pea 2*

Pea protein ingredient Pea 2 is produced following the procedure described in Example 1.2, except for the following extraction process. The alkali extraction solution was adjusted to 9.0. The obtained extract is then acidified to precipitate and form curds at a pH near the isoelectric point of pH 4.5 (pH 4.4 - 4.6). The washed curds precipitated from solution are then adjusted to pH 6.5. The slurry obtained is then heat treated at a temperature of 78°C for 20 min and cooled to 50°C. The slurry is finally spray-dried to obtain a pea protein ingredient with no more than 7% humidity with total protein content of 90 % in dry matter.

*Example 1. 4. Extraction process of faba protein ingredient Faba 1*

Faba protein ingredient Faba 1 is obtained following the extraction process. The faba protein ingredient has at least 85.0 wt. % protein on a dry basis, i.e. it is a faba protein isolate. The detailed extraction process is as follows: The faba beans are first cleaned, cracked, and dehulled to remove the outer shell of the bean. Defatting: The defatting process removes the oil from the cleaned, cracked, and dehulled faba beans. This is done using hexane. Extraction: The dehulled faba bean obtained from the previous steps and water are mixed in the weight ratio 1:6 at a temperature of approximately 20°C. An alkali solution (sodium hydroxide) is added to adjust the pH to 8.5. The alkali-extracted solution is then separated from the insoluble soybean residues using a centrifuge. The resulting solution contains the dissolved proteins, whilst the solid residue is discarded. Acidification: The extract obtained from the previous step is then acidified to precipitate and form curds at a pH near the isoelectric point of pH 4.8 (pH 4.5 - 4.8). The precipitated proteins form a curd and are then separated by centrifugation. Washing: the curd is washed with water to remove any remaining impurities, such as residual alkaline

solution. Neutralization: The washed curds precipitated from solution are then adjusted to pH 7.0. Heating and Spray-drying: The slurry is then heat treated at a temperature of 80°C for 15 min using steam injection and cooled to 60°C. The slurry is finally spray-dried to obtain a faba protein ingredient with no more than 7% humidity with total protein content of 85 % in dry matter.

*Example 1.5. Extraction process of faba protein ingredient Faba 2*

Faba protein ingredient Faba 2 is produced following the procedure described in Example 1.4, except for the following steps: The alkali-extracted solution is mixed under high shearing for 15-30 min. After neutralization the slurry was heated to 120°C for 3 minutes and cooled to 50°C. The slurry is finally spray-dried to obtain a faba protein ingredient with no more than 7% humidity with total protein content of 85.0 % in dry matter.

*Example 1.6. Extraction process of faba protein ingredient Faba 3*

Faba protein ingredient Faba 3 is produced following the procedure described in Example 1.4, except for the following steps: After washing the curds post-precipitation at isoelectric point, no neutralization was carried out. The obtained slurry was heated to 95°C for 10 minutes and cooled to 50°C. The slurry is finally spray-dried to obtain a faba protein ingredient with no more than 7% humidity with total protein content of 85 % in dry matter.

**Example 2. Physicochemical characterization of plant-based protein isolates - particle-size distribution.**

*Example 2.1. Method of protein dispersion*

Protein dispersions were initially prepared by dispersing the protein isolate (PI) powders prepared in Example 1 in distilled water (to achieve 1.0 wt.% protein concentration) along with 0.5% w/w of salt for approximately 1 hour under slow stirring at room temperature using a magnetic stirrer (RT2 Basic, Thermo Fisher Scientific, Waltham, USA). Sodium chloride (NaCl) was initially dissolved in water to achieve 0.5% w/w. The pH of the dispersions was then measured and adjusted to 7.0 at 25 °C, using as required 1 M hydrochloric acid or 1 M sodium hydroxide in a drop-by-drop manner and left under slow stirring for 1 hour using a magnetic stirrer (as described above). Protein dispersions were then stored overnight in a 4°C fridge.

*Example 2.2. Particle size distribution by Static Light Scattering (SLS)*

The particle size of the dispersions was determined by laser diffraction using static light scattering (referred to hereafter as SLS).

The dispersions of plant protein ingredient (Soy 1, Pea 1, Pea 2, Faba 1, Faba 2 and Faba 3) were analyzed by Static Light Scattering using a Mastersizer 3000 (Malvern Instruments Ltd®, UK).

SLS is a technique that measures the intensity of the scattered light of dispersed particles illuminated by a laser beam. Particles are hit by a red beam light ($\lambda$=633 nm) and a blue beam light ($\lambda$=470 nm) and diffract these in all directions. Large particles diffract light on smaller angles with high intensity, whereas small particles diffract light on wider angles with lower intensity. The formulations were analyzed in triplicate by SLS using a Mastersizer 3000 (Malvern Instruments Ltd®, UK). The results were treated using the Mie theory, which assumes that the particles measured are perfect spheres. The protein dispersion samples (1.0 wt.%) were mixed and dispersed in the LV measuring cell until an obscuration level of 10% was obtained. Measurements were performed in triplicate and the average of the three replicates was reported in the table hereafter.

The volume weighted mean diameter D[4,3] of the protein isolate dispersions at 1.0 wt.% protein concentration at pH 7.0, 25°C and 0.5 wt% NaCl are gathered in Table 1 below.

*Table 1. Particle size distribution D[4,3] of the protein isolates when dispersed at a concentration of 1.0 wt. % total protein, with 0.5 wt. % NaCl, pH 7 at 25°C)*

| *Protein Ingredient* | *Soy 1* | *Pea 1* | *Pea 2* | *Faba 1* | *Faba 2* | *Faba 3* |
|---|---|---|---|---|---|---|
| *D [4,3] ($\mu m$)* | 134 ± 1.2 | 86.2 ± 0.6 | 81.5 ± 1.2 | 85.1 ± 1.1 | 247 ± 6.6 | 64.6 ± 0.5 |

As it can be seen in Table 1, Pea 1, Pea 2, Faba 1 and Faba 3 protein isolates have D [4,3] values which are between 10 to 130 $\mu$m.

The diameter D90 of the protein isolate dispersions at 1.0 wt.% protein concentration at pH 7.0 and 0.5 wt% NaCl

are gathered in Table 2 below.

*Table 2. D90 of the protein isolate when dispersed at a concentration of 1.0 wt. % total protein, with 0.5 wt. % NaCl, pH 7 and 25°C).*

| *Protein Ingredient* | *Soy 1* | *Pea 1* | *Pea 2* | *Faba 1* | *Faba 2* | *Faba 3* |
|---|---|---|---|---|---|---|
| *D90 ($\mu m$)* | 254 ± 4.2 | 163 ± 1.5 | 158 ± 0.1 | 163 ± 2.1 | 509 ± 17.8 | 138 ± 1.0 |

**Example 3. Physicochemical characterization of plant-based protein isolates - solubility.**

Protein dispersions (Soy 1, Pea 1, Pea 2, Faba 1, Faba 2 and Faba 3) were prepared following the method described in section Example 2.1. The prepared protein dispersions in closed glass bottles were placed in water bath at 70°C for 1 hour and then cooled to room temperature before storing in refrigerator at 4° to 7°C overnight. The dispersions were taken out of the fridge the next day and left at room temperature for 1 hour. The protein dispersions were then centrifuged at 7500 RPM for 10 minutes using a Sorvall ST 8 centrifuge (Thermo scientific) and the supernatant was collected and passed through 0.45 $\mu$m syringe filter (Branchia) made of polyethylene sulphonate (PES). The filtrate was analyzed for quantifying the protein concentration using Dumas method and the solubility (%) was calculated using the following formula:

$$Solubility\ (\%) = \frac{Concentration\ of\ protein\ in\ filtrate}{Total\ protein\ concentration\ in\ the\ dispersion}$$

The Dumas method of protein quantification is based on the combustion of the sample, and a subsequent purification of the gases obtained and the measurement of the thermal conductivity of nitrogen gas which is later translated into protein content.

The protein solution (0.5 mg - 1g) was placed in tin foil boat which is placed in combustion chamber and was purged of any atmospheric gas that would have entered the preparation process. Subsequently, the sample is subjected to combustion with oxygen at around 900 -1000°C for a duration of few minutes. After a first filtration of the gases obtained, they pass to a zone of homogenization. An aliquot of the gases obtained passes through copper to remove the oxygen gas and reduce nitrous oxides to nitrogen gas. Next, the gaseous aliquot of the sample passes through a molecular sieve. This molecular sieve retains unwanted gases such as carbon dioxide and water vapor, while nitrogen gas is entrained by a stream of helium gas to a thermal conductivity detection cell. The equipment transforms the signal obtained into a measurement area. Quantification is carried out with interpolation in the calibration curve with EDTA as standard for nitrogen. An interpolation of the sample's (corrected) area is done on the calibration line.

By applying the sample weight factor, the result is obtained in percentage of nitrogen N (%) in the sample. The percentage of protein in the sample is given by the following formula:

$$Protein\ (\%) = N\ (\%)\ x\ f$$

The nitrogen-to-protein conversion factor *f* is used to convert nitrogen % to protein%. It depends on the amino acid profile of the protein therefore its value is specific to each protein. For the proteins used herein, factor *f* has been obtained from literature according to Table 3 below.

*Table 3. Factor f of the protein sources Soy, Pea, Faba and Potato*

| *f* | *Protein source* | *Reference* |
|---|---|---|
| 5.5 | SOY | Mosse, Jacques. "Nitrogen-to-protein conversion factor for ten cereals and six legumes or oilseeds. A reappraisal of its definition and determination. Variation according to species and to seed protein content." Journal of Agricultural and Food Chemistry 38.1 (1990): 18-24 |
| 5.4 | PEA | Mosse, Jacques. "Nitrogen-to-protein conversion factor for ten cereals and six legumes or oilseeds. A reappraisal of its definition and determination. Variation according to species and to seed |
| | | protein content." Journal of Agricultural and Food Chemistry 38.1 (1990): 18-24 |

(continued)

| f | Protein source | Reference |
|---|---|---|
| 6.25 | FABA | Berrazaga, Insaf, et al. "Formulation, process conditions, and biological evaluation of dairy mixed gels containing faba bean and milk proteins: Effect on protein retention in growing young rats." Journal of dairy science 102.2 (2019): 1066-1082 |

For other proteins, the *f* factor may be obtained from literature or assumed to be 6.25.

The solubilities values of the different protein isolates (PI) prepared in Example, when dispersed at 70°C for 1.0% total protein concentration along with 0.5% NaCl at pH 7 is given in table below. The data was obtained after three repetitions and the mean values are presented along with their standard deviation.

*Table 4. Solubilities of the protein isolates when dispersed at a concentration of 1.0 wt. % total protein, with 0.5 wt. % NaCl, pH 7 and 70°C).*

| Protein Ingredient | Soy 1 | Pea 1 | Pea 2 | Faba 1 | Faba 2 | Faba 3 |
|---|---|---|---|---|---|---|
| Solubility % | 20.2 ± 0.9 | 7.8 ± 0.9 | 16.0 ± 0.9 | 46.0 ± 2 | 14.0 ± 1 | 10.0 ± 0.1 |

Protein isolate Faba 1 has a solubility of 46 % ± 2 %.

**Example 4. Production of vegan food products using different plant-based protein isolates.**

Vegan food products using different protein isolates (PI) were prepared and tested for their product performance in this example. The different PI presented in example 2 were used, namely Soy1, Pea 1, Pea 2, Faba 1, Faba 2 and Faba 3. The process for preparing the food product is described hereafter. Distilled water was used in all the examples below and is referred to as water.

<u>Process for manufacturing vegan food products</u>

The process for the manufacture of the vegan food products described hereafter has been carried out using a Thermomix (Thermomix® TM6, Vorwerk, Spain M.S.L., S.C). All the ingredients such as salt, proteins, water, were first weighed in separate containers and their composition is given below in Table 5. About 30 g of water was kept in reserve and rest of the weighed water and salt 1.0 wt% (sodium chloride purchased from Mercadona supermarket) are taken in Thermomix jar and stirred for 2 minutes at speed 2.5 (300 - 400 RPM). The vegan protein isolate was then dispersed into the water phase at speed 3 (500 RPM) for 5 minutes at room temperature (approximately 25°C) while intermittently stopping the stirring and scraping to incorporate the protein powder sticking to the sides of the jar. pH was adjusted to 7.0 with lemon juice concentrate (with an average °Brix of 53 and an acidity of 37%) or with sodium hydroxide 1 M added in a drop-by-drop manner to the mix while stirring. For the mass of lemon juice concentrate or sodium hydroxide added, the same of mass of water was removed from the 30 g of water that was kept in reserve and rest of the water was added to the mixture. The slurry was then mixed for 5 more minutes at speed 3 (500 RPM) at RT. A first step of heating of the mixture at 80°C for 7.5 minutes at speed 3 was applied followed by a second step of heating at 90°C for 7.5 minutes at speed 3 (500 RPM). The mixture is then quickly transferred to vacuum bags (200 × 300 mm) while its warm and vacuum sealed using Zermat BLUESVAC-42+ vacuum sealer and then allowed to come to room temperature for 30 minutes. Then the product is placed in refrigerator at 4°C to 7°C overnight before further tasting or testing.

*Table 5. Composition of vegan food product with varying protein isolates*

| PI (20 wt.%) | Soy 1 | Pea 1 | Pea 2 | Faba 1 | Faba 2 | Faba 3 |
|---|---|---|---|---|---|---|
| Lemon juice concentrate (LJ) or 1M NaOH (%) | 1.1 (NaOH) | 4.2 (NaOH) | 0.1 (LJ) | 0.5 (NaOH) | 1.1 (NaOH) | 4.9 (NaOH) |
| Water (%) | 77.9 | 74.8 | 78.9 | 78.5 | 77.9 | 74.1 |
| NaCl (%) | 1.0 | | | | | |

**Example 4.1. Sensorial attributes of the food products and their assessment.**

*Sensory profiling method*

The sensory panel for evaluation of texture attributes (such as creaminess, firmness and graininess) consisted of a group of nine (n=9) trained internal personnel. The participants underwent an extensive training protocol, involving a three-week program with six hours dedicated per week to ensure proper calibration of key texture attributes, standardization of reference points, and consistent use of a defined scale. Training involved both market products and in-development prototypes.

The sensory evaluation was conducted utilizing a descriptive analysis methodology, based on a modified variant of the Spectrum method [Yamagata, Yoshie, and Yoshiaki Sugawara. "Sensory evaluation spectrum method as a descriptive sensory analysis." Psychology 5.14 (2014): 1591]. Instead of relying on absolute intensity scales, the panel employed a market-calibrated 16-point category scale (ranging from 0 to 15), adjusted for the product category under evaluation. All market reference products were obtained from Mercadona®, Spain. Definitions of attributes and associated market reference points for calibration are outlined in subsequent description.

During each profiling session, panellists were permitted to recalibrate their sensory perceptions by retasting the predefined market references. Upon completion of the reference refreshment, each panellist proceeded to evaluate eight (8) distinct product samples per session. The samples were served at approximately 4°C (refrigerated) and presented in a blind format, randomized by a 3-digit code. Between each sample, the panellists were instructed to cleanse their palate using unsalted crackers and water, observing a 90-second interval between evaluations. Profiling was conducted in duplicate, and all data were recorded using the Compusense® software system.

*Sensorial attributes and their reference scales*

**Firmness:** It refers to the force required to compress the sample between the tongue and the palate. The panellists were trained to compress the sample steadily against the palate.

The reference market products used for calibrating the firmness scale (0 - 15) is given below, being 0 the less firm product and 15 the most firm product.

*Table 6. Reference market products chosen for training sensory panel on firmness scale and their values on 16-point scale between 0 - 15.*

| *Reference product* | Whipped cream Hacendado® | Nutella® | Butter (unsalted) Hacendado® |
|---|---|---|---|
| *Firmness Score* | 0 | 4 | 15 |

**Creaminess:** It refers to the sensation of fullness in mouth, associated with a fatty feeling in mouth that melts slowly. To measure this, panellists were trained to consider the sensation after measuring all the other attributes. The reference market products used for calibrating the creaminess scale (0 - 15) is given below, being 0 the less creamy product and 15 the most creamy product.

*Table 7. Reference market products chosen for training sensory panel on creaminess scale and their values on 16-point scale between 0 - 15.*

| *Reference product* | Hummus (classic) Hacendado® | Mayonnaise Hellmann's® | Philadelphia® Original Cream Cheese |
|---|---|---|---|
| *Creaminess Score* | 0 | 7 | 15 |

**Graininess:** It refers to perception of small, distinct particles in a product's texture, which can be felt during chewing or as the product dissolves in the mouth. It indicates a lack of smoothness, where the texture may feel coarse or gritty rather than uniformly smooth. The reference market products used for calibrating the graininess scale (0 - 15) is given below, being 0 the less grainy product and 15 the most grainy product.

*Table 8. Reference market products chosen for training sensory panel on graininess scale and their values on 16-point scale between 0 - 15.*

| *Reference product* | Philadelphia® Original Cream Cheese | Hummus (classic) Hacendado® | Basil Pesto Hacendado® | Grainy Mustard Hacendado® |
|---|---|---|---|---|
| *Graininess Score* | 0 | 4 | 7 | 15 |

*Creaminess perception*

The creaminess of a product is typically associated with a sensation of "richness" that we experience when tasting products where fat droplets are dispersed (in an emulsion), such as cream cheese or mayonnaise. Research has shown that the perception of creaminess is influenced by factors like firmness and smoothness, with the latter being the opposite of graininess. However, comparing creaminess across different products can be challenging, as each product varies in terms of firmness. To address this in our analysis, we decided to normalize creaminess scores against firmness (creaminess/firmness) to allow for more meaningful comparisons between samples and to better differentiate between positive and negative examples.

*Table 9. Sensorial attribute scores (on a scale 0-15) and their standard deviation (STD) obtained for different protein isolates at 20% concentration and 1% NaCl at pH 7. Fisher's LSD post-hoc analysis and was found to be significant at $\alpha < 0.01$. More details about this statistical analysis can be found elsewhere [Williams, Lynne J., and Herve Abdi. "Fisher's least significant difference (LSD) test. "Encyclopedia of research design 218.4 (2010): 840-853].*

| | Soy 1 | Pea 1 | Pea 2 | Faba 1 | Faba 2 | Faba 3 |
|---|---|---|---|---|---|---|
| Firmness | 7.7 | 3.7 | 1.3 | 2.2 | 6.2 | 2.5 |
| *STD* | 3.6 | 0.5 | 0.5 | 1.3 | 2.1 | 0.5 |
| Creaminess | 0.8 | 5.3 | 3 | 7.3 | 6.8 | 2.5 |
| *STD* | 0.8 | 4.4 | 1.4 | 2.4 | 3.5 | 1.9 |
| Creaminess/Firmness | 0.1 | 1.4 | 2.3 | 3.3 | 1.1 | 1.0 |
| Graininess | 3.8 | 1.8 | 2.2 | 0.8 | 2 | 2.8 |
| *STD* | 1.7 | 1.2 | 1.5 | 0.8 | 1.5 | 1.2 |

The results presented in Table 9 are scores for firmness, creaminess and graininess obtained from the sensory panel as described in the previous section. The selection limits set for all the samples are for two factors: a) normalised creaminess (i.e. creaminess/ firmness) ≥ 1.5; and b) graininess ≤ 1.8. As it can be seen in the above table Faba 1 is the PI that matches the both selected criteria.

**Example 4.2. Texture analysis of food products**

In addition to sensory evaluation, the prepared vegan food products were subjected to 'work of shear' analysis utilizing a Texture Analyser (TA.XT.Plus C, Stable Micro Systems, Surrey, UK). The analysis was conducted using a 'spreadability' rig (HDP/SR) attachment comprising a conical-shaped probe (male cone) and an inverted conical cup (female cone) 90° angle, designed to hold the sample.

Initially, the conical probe and the sample holder were aligned and mounted onto the instrument platform. Following alignment, the positions of the probe and holder were fixed, and the distance between the tip of the movable conical probe and the fixed tip of the sample holder was calibrated. A predetermined starting distance of 50 mm was maintained between the probe and the holder.

Subsequently, the sample holder was removed and filled with the low-fat food product, which had been previously stored in fridge at approximately 4-7°C overnight and then equilibrated in a water bath at ambient room temperature for a minimum duration of one hour. The sample was carefully transferred into the holder, ensuring that no air bubbles were present. The filled sample holder was then re-positioned onto the rig for analysis.

The test procedure involved setting the probe to move at a constant speed of 3 mm/s. The probe was programmed to penetrate the sample until it reached the bottom of the holder, at which point it returned to its initial position. During penetration, the force exerted by the probe was continuously recorded. The force is minimal when the tip of the cone touches the product in the cup and increases with further penetration of the conical probe (which is constant 3mm/s). The force is recorded until the tip of the probe reaches the bottom most part of the cup and retracts to its original position. While the probe is pressing into the sample, the force is positive and while retracting, the force becomes negative. For the analysis of our samples in the examples below only the resulting area under the force versus time curve, while pressing into the sample was used to calculate the work of shear (g.s), which provides a quantitative measure of the firmness of the spreadable sample. The analysis was done using Exponent Connect software, provided by Stable Micro Systems. Three replicates of measurement for each sample were performed and its mean and standard deviation were analysed.

**Example 4.3. Rheological analysis of food products**

**Experimental details**

The rheological measurements were carried out on the stress-controlled rheometer MCR 102e (from Anton Paar) with a 25 mm sandblasted parallel plate geometry (PP25/S) in a 1.5 mm gap at 22 °C. Both the parallel plate and bottom plate were sand blasted (purchased from Anton Paar) to prevent/minimize wall slip. The samples were carefully loaded on the bottom plate with a spoon. After lowering the upper plate to a gap width of 1.525 mm, excess of sample was removed with a spatula. A final gap distance of 1.5 mm was applied, and samples were allowed to relax for 2 min. The 1.5 mm gap was chosen to avoid the confinement effect of the proteins and gap errors from the sand blasted surface. To maintain a constant temperature of 22 °C during measurements and to prevent dehydration or drying out of samples, a temperature-controlled Peltier unit with evaporation minimized hood and a solvent trap ring were used.

Before measurements, all samples (which were kept in refrigerator overnight after preparation) were allowed to equilibrate to 22 °C for 1 hour. For rheological study, to ensure all samples had the same shear history, all samples (except 30% Faba 1 sample) were sheared at a shear rate of 100 $s^{-1}$ for 2 min and waited for 2 min in order to create a controlled initial state in the samples. 30% Faba 1 sample could not be pre-sheared at a shear rate of 100 $s^{-1}$ as the sample was not stable between the plate because of high firmness and G', but it was stable at pre shear of shear rate 10 $s^{-1}$. So, for this sample, pre-shear of shear rate 10 $s^{-1}$ was applied before studying the flow curve; the only exception is, the initial state or condition of the sample for the flow curve was not exactly the same as all other samples.

The rotational shear test (flow curve as well as viscosity curve) was performed in a controlled shear rate (CSR) mode with shear rates from 0.01 $s^{-1}$ to 200 $s^{-1}$, both increasing and decreasing, in logarithmically spaced steps with 7 points per decade. Each shear step is maintained for a duration of 20 s. Rheometer software (RheoCompass) allows one to choose desired steps of shear rate for the flow curve and it involves a smooth incremental transition from one shear rate to the next shear rate. The flow curve data (as well as viscosity curve data) were collected. The study was performed three times with the newly loading samples for all food products. There was no significant wall slip observed with most of the samples while using sandblasted plates. However, for highly creamy samples (whose sensory creaminess score is greater than 7), a slight wall slip (which is not significant) can be observed at lower shear rate while studying the flow curve. To minimize or avoid fitting error for those, rheological parameters were averaged over the triplicates with standard deviation.

To fit the Herschel-Bulkley (HB) model, low to high shear rate sweeps data were used because most samples exhibit thixotropy. To fit the Herschel-Bulkley model, we used a range from 0.1$s^{-1}$ to 200 $s^{-1}$ to make it systematic and consistent for all samples. Yield stress ($\sigma_y$) was calculated from the HB model fit to the stress versus shear-rate data from flow-curve. Flow index (n) is also extracted using the same model fit to understand shear thinning/thickening behaviour of samples and then spreading/flowing behaviour above yield stress. This was done for all collected data.

In addition, the viscosity at a shear rate of 50 $s^{-1}$ was determined from the viscosity vs shear rate plot/graph while data collected with increasing shear rate. The viscosity data are collected from the measurement of three newly loaded samples and the viscosity is determined by averaging them.

The amplitude sweep (specifically large amplitude oscillatory shear (LAOS)) studies were performed at 22 °C to observe their viscoelastic behavior at linear viscoelastic region (LVR) as well as beyond LVR region using a set frequency of f = 1 Hz with logarithmically increasing strain from 0.01% to 100 %. These studies were performed to understand mostly the hardness/stiffness or storage modulus of the sample. The elastic modulus (G') of the samples was taken from the LVR region at strain 0.109%. All extracted parameters (with their standard deviation (STD)) from rheological characterization are shown in Tables 10, 13, 16 and 19. In addition, the viscosity at a shear rate of 50 $s^{-1}$ is also shown with their STD in the same Tables.

**Data Analysis:**

The HB model (Equation 3 provided below) fitting to all stress versus shear rate data (a range from 0.1 to 200 1/s) was done using Microsoft Excel Solver non-linear fitting method. Extracted parameters were used for viscosity-based HB model (Equation 4 provided below) to fit the viscosity vs shear rate data and found a perfect fit to it. In addition, few of the data is fitted in OriginLab software using same equation to check correctness of the fit and found no difference.

The Herschel-Bulkley model is a yield stress model. This model describes non-Newtonian behaviour after yielding and is fundamentally a power law model with having a yield stress. The Herschel-Bulkley equation is written as follows [Laura Patricia Martinez-Padilla. "Rheology of liquid foods under shear flow conditions: Recently used models." J Texture Stud, 55 (2024): e12802],

$$\sigma = \sigma_y + k(\dot{\gamma})^n \qquad \text{Equation 3}$$

The viscosity-based equation is introduced for the HB model, shown below [Laura Patricia Martinez-Padilla. "Rheology of liquid foods under shear flow conditions: Recently used models." J Texture Stud, 55 (2024): e12802]:

$$\eta = \frac{\sigma_y}{\dot{\gamma}} + k(\dot{\gamma})^{n-1} \qquad \textit{Equation 4}$$

where $\eta$ is the viscosity, $\sigma_y$ is the yield stress (Pa), k refers to the consistency index (Pa.s), $\gamma$ is the shear rate and n is the flow index (dimensionless). The term n describes the extent to which a material is shear thickening (n > 1) or shear thinning (n < 1). Specifically, the flow behaviour index will be equal to 1 for Newtonian fluids (yield stress is zero in such case), greater than 1 for shear thickening foods and less than 1 for shear thinning non-Newtonian foods. The consistency coefficient is generally greater than 0 and will vary depending on the food samples.

Rheological parameters were averaged over the triplicates and standard deviation was estimated using the Microsoft Excel function. Most of the plotting and calculations were done using Microsoft Excel. The same was used to explore the relation between sensory attributes, rheological (rheo) parameters and texture analyzer (TA) parameters. A univariate analysis by Pearson correlation was performed and possible correlation was checked by estimating Pearson correlation coefficient with respective p values.

**Rheology of food products using different vegan protein isolates:**

The yield stress, flow index, storage modulus and viscosity for various plant-based protein isolate based samples described in in this example (see Table 5 for composition) are shown in Table 10. The yield stresses of the food product based on soy 1 and faba 2 protein isolates are slightly higher than other food products. The $\sigma_y$ for the food product based on pea 1 protein ingredient is zero, indicating that it is not a yield stress fluid, but a pseudoplastic fluid with shear thinning. The yield stress of other food products is lower and easier to food product at low shear stress. The flow index for all food products shows n < 1, indicating shear thinning behavior for all food products, with no significant difference found in flow behavior for all food products based on protein isolates (20%). The reason for the phenomenon of shear thinning may lie in the combined effect of the orientation of proteins along the shear direction and the rearrangement and deformation of the structure under shear, which minimizes the flow resistance.

A comparison between the rheological parameters with sensory firmness and work of shear from TA measurement is shown in Figure 1. The trend of different parameters seems almost the same for all food products of protein isolates. In order to quantify a correlation between them, a statistical analysis was performed to estimate Pearson correlation coefficients with p-values, considering all studied food products, explained below.

*Table. 10: Rheological profile for various proteins samples of 20% at pH 7 at 22$^0$C: Yield stress, and flow index are obtained from HB model fit to flow curve. G' is obtained from amplitude sweep study and viscosity is obtained from viscosity vs shear rate flow curve. The STD is extracted from the triplicate data collected for all samples*

| Samples (based on various proteins) | Yield stress ($\sigma_y$) (Pa) | G' (Pa) | Flow index (n) | Viscosity at 50 $s^{-1}$ (Pa.s) |
|---|---|---|---|---|
| Soy 1 | 157.20 ± 1.02 | 1205.30 ± 17.31 | 0.51 ± 0.00 | 6.31 ± 0.05 |
| Pea 1 | 0.00 | 147.81 ± 3.23 | 0.46 ± 0.02 | 1.96 ± 0.10 |
| Pea 2 | 67.80 ± 3.2 | 934.04 ± 30.96 | 0.51 ± 0.02 | 3.43 ± 0.22 |
| Faba 1 | 39.86 ± 2.18 | 301.23 ± 9.53 | 0.38 ± 0.02 | 2.20 ± 0.12 |
| Faba 2 | 151.16 ± 3.12 | 2057.20 ± 33.93 | 0.42 ± 0.00 | 8.74 ± 0.50 |
| Faba 3 | 27.63 ± 0.95 | 357.31 ± 12.83 | 0.45 ± 0.01 | 3.92 ± 0.35 |

**Example 5. Production of plant-based low-fat food products at different plant-based protein concentrations.**

Vegan food products using different plant-based protein isolate (PI) concentrations were tested for their product performance in this example and their composition is presented in Table 11. Faba 1 is used in this example. The process for preparing the product is described in the example 4. The sodium chloride used in this example was purchased from Mercadona supermarket. To adjust the pH of the products to pH 7 sodium hydroxide 1M was added in a drop by drop manner to the mix while stirring, 5 minutes after addition of the PI powder.

*Table 11. Composition of vegan food product with varying concentrations of protein isolate*

| *Faba 1 PI (%)* | 8.0 | 10.0 | 12.5 | 15.0 | 20.0 | 25.0 | 27.5 | 30.0 |
|---|---|---|---|---|---|---|---|---|
| *1M NaOH (%)* | 0.1 | 0.2 | 0.2 | 0.3 | 0.5 | 0.7 | 0.7 | 0.8 |
| *Water (%)* | 90.9 | 88.8 | 86.3 | 83.7 | 78.5 | 73.3 | 70.8 | 68.2 |
| *NaCl (%)* | *1.0* | | | | | | | |

The results of the sensorial analysis are described hereafter.

*Table 12. Sensorial attribute scores (on a scale 0-15) obtained for different Faba 1 protein isolate concentrations and 1% NaCl at pH 7. Fisher's LSD post-hoc analysis and was found to be significant at $\alpha$ < 0. 01.*

| | 8% | 10% | 12.5% | 15% | 20% | 25% | 27.5% | 30% |
|---|---|---|---|---|---|---|---|---|
| Firmness | 0* | 0.1 | 0.3* | 1.2 | 2.2 | 2.7 | 7.4* | 11.7 |
| *STD* | n.a. | 0 | n.a. | 1 | 1.3 | 1.5 | n.a. | 1.3 |
| Creaminess | <0* | 0.2 | 1.5* | 2.2 | 7.3 | 10.2 | 10.1* | 10 |
| *STD* | n.a. | 0.4 | n.a. | 2.2 | 2.4 | 2.2 | n.a. | 3.1 |
| Creaminess/Firmness | n.a. | 2.0 | 5.0 | 1.8 | 3.3 | 3.8 | 1.4 | 0.9 |
| Graininess | 0.7* | 0.5 | 0.7* | 0.8 | 0.8 | 0.5 | 1.0* | 1.5 |
| *STD* | n.a | 0.5 | n.a. | 0.8 | 0.8 | 0.5 | n.a. | 2.3 |
| * - calculated values obtained by fitting the data.<br>n.a. - not applicable. | | | | | | | | |

The results presented in Table 12 were subjected to Fisher's LSD post-hoc analysis and was found to be significant at $\alpha < 0.01$ [Williams, Lynne J., and Herve Abdi. "Fisher's least significant difference (LSD) test." Encyclopedia of research design 218.4 (2010): 840-853]. As previously explained, the selection limits set are for two factors: a) normalised creaminess (i.e. creaminess/ firmness) >_ 1.5, and b) graininess ≤ 1.8. The sensorial attributes were obtained for PI concentrations 10%, 15%, 20%, 25% and 30% respectively for Faba 1 protein ingredient. For PI concentrations 8%, 12.5% and 27.5% (w/w), the firmness and creaminess were calculated using the equations displayed in Figure 2 a and b. The graininess scores ranged between 0.5 and 0.8 for PI concentrations 10% to 25% (w/w) and then increased from 0.8 to 1.5 for PI concentrations 25% to 30% (w/w). Therefore, the graininess value for 8% and 12.5 % PI concentrations (w/w) was calculated to be a mean between 0.5 and 0.8 which is 0.7 and for 27.5 % it was mean between 0.5 and 1.5 which is 1.0.

The firmness scores vs PI% followed an exponential relation whereas the creaminess vs PI% followed a linear relation until it levelled off at creaminess score of 10.0 approximately. This indicates the limit at which the creaminess could improve with increasing Faba 1 PI%. The firmness scores followed a very similar trend with work of shear data obtained from texture analyser and flow index and storage as presented in Figure 3. The pearson correlation was also found to be positive and well correlated which could be seen in Table 20, which gives us the confidence in sensory data obtained. 10% to 25% Faba 1 PI concentrations scored positive for both creaminess/firmness ratio and graininess scores, whereas 8% was estimated to be less than 0 and 30% scored lower than 1.5 for creaminess/firmness ratio as shown in Table 9.

Therefore, the protein isolate content in the product should be greater than 8 wt.% and should be less than 30 wt.%..

**Rheology of food products at different Faba 1 protein concentrations**

The yield stress, flow index, storage modulus and viscosity of the food products of Table 11 having various concentrations of protein isolate are shown in Table 13. A systematic increase in yield stress is observed with increasing concentration of faba 1 protein isolate. The yield stress for 30% faba 1 food product is 254 Pa, which is very high for a food product. As mentioned before, it is a highly firm sample, so the sudden high pre-shear could not be performed during the flow curve, indicating a high yield food product. The $\sigma_y$ for the food product of 10% faba 1 protein ingredient is very small, indicating that it can be easily spread with the application of very small shear stress. The flow index shows n < 1, indicating shear thinning behavior for all food products. A continuous decrease in the flow index (n) is observed with increasing concentration of faba 1 ingredient, which seems to indicate shear thinning behavior with increasing creaminess.

A comparison between the rheological parameters with sensory firmness and work of shear from TA measurement for different protein isolate concentrations is shown in Figure 3. The trend of different parameters seems almost the same for all food products of protein isolates. The yield stress of samples ranges from 3.61 Pa to 254 Pa, which corresponds to a sensory firmness score ranges from 0.1 to 11.7. The work of shear range of 200-4000 g.s is equivalent to a sensory firmness score ranges from 0.1 to 11.7. In order to quantify a correlation between them, a statistical analysis was performed to estimate Pearson correlation coefficients with p-values, considering all studied food products, explained later.

*Table 13: Rheological profile for Faba 1 based samples at pH 7 with variable concentrations at 22$^0$C: Yield stress, and flow index are obtained from HB model fit to flow curve. G' is obtained from amplitude sweep study and viscosity is obtained from viscosity vs shear rate flow curve. The STD is extracted from the triplicate data collected for all samples.*

| Samples (Faba 1 based samples with variable PI concentratio ns) | Yield stress ($\sigma_y$) (Pa) | G' (Pa) | Flow index (n) | Viscosity at 50 $s^{-1}$ (Pa.s) |
|---|---|---|---|---|
| 10% | 3.61± 0.29 | 32.26 ± 1.41 | 0.54 ± 0.01 | 0.19 ± 0.01 |
| 12.5 % | 9.76 ± 0.22 | 52.35 ± 4.91 | 0.48 ± 0.00 | 0.43 ± 0.02 |
| 15 % | 23.56 ± 1.60 | 159.42 ± 4.95 | 0.49 ± 0.01 | 1.00 ± 0.02 |
| 20% | 39.86 ± 2.18 | 301.23 ± 9.53 | 0.38 ± 0.02 | 2.20 ± 0.12 |
| 25% | 113.72 ± 0.39 | 987.47 ± 45.2 | 0.32 ± 0.02 | 5.88 ± 0.28 |
| 27.5 % | 168.89 ± 10.86 | 1447.80 ± 104.33 | 0.33 ± 0.01 | 8.7 ± 0.28 |
| 30% | 254 ± 14.59 | 4884 ± 74.41 | 0.24 ± 0.01 | 15.68 ± 0.56 |

**Example 6. Production of plant-based low-fat food products at different pHs.**

Vegan food products at different pH were tested for their product performance in this example. Faba 1 protein isolate is used in this example. The process for preparing the product is described in example 4. The sodium chloride used in this example was purchased from Mercadona supermarket. To adjust the pH of the products either lemon juice concentrate (with an average °Brix of 53 and an acidity of 37%) or sodium hydroxide 1M was added in a drop by drop manner to the mix while stirring, 5 minutes after addition of the PI powder and the composition is given in Table 14.

*Table 14. Composition of vegan food product with varying pH values*

| *Faba 1 PI (%)* | 20 | | | |
|---|---|---|---|---|
| *pH* | 5 | 5.5 | 6.0 | 7.0 |
| *Lemon juice concentrate (LJ) or 1M NaOH* | *1.1 (LJ)* | *0.8 (LJ)* | *0.3 (LJ)* | *0.5 (NaOH)* |
| *Water* (%) | 77.9 | 78.2 | 78.7 | 78.5 |
| *NaCl* (%) | 1 | | | |

The results of the sensory evaluation are described hereafter.

*Table 15. Sensorial attribute scores (on a scale 0-15) obtained for Faba 1 protein isolates at 20% concentration and 1% NaCl and varying pH values. Fisher's LSD post-hoc analysis and was found to be significant at $\alpha$ < 0.01.*

| | pH 5 | pH 5.5 | pH 6 | pH 7 |
|---|---|---|---|---|
| Firmness | 0.2 | 0.9* | 1.8 | 2.2 |
| *STD* | 0.4 | n.a. | 1.2 | 1.3 |
| Creaminess | 0.2 | 2.4* | 4.5 | 7.3 |
| *STD* | 0.4 | n.a. | 2.5 | 2.4 |
| Creaminess/Firmness | 1.0 | 2.7* | 2.5 | 3.3 |

(continued)

| | pH 5 | pH 5.5 | pH 6 | pH 7 |
|---|---|---|---|---|
| Graininess | 2.3 | 1.8* | 1.2 | 0.8 |
| *STD* | 1.5 | n.a. | 1 | 0.8 |
| * - calculated values obtained by fitting the data.<br>n.a. - not applicable. | | | | |

The results presented in Table 15 were subjected to Fisher's LSD post-hoc analysis and was found to be significant at $\alpha < 0.01$. More details about this statistical analysis can be found elsewhere [Williams, Lynne J., and Herve Abdi. "Fisher's least significant difference (LSD) test." Encyclopedia of research design 218.4 (2010): 840-853]. As previously explained, the selection limits set are for two factors: a) normalised creaminess (i.e. creaminess/ firmness) >_ 1.5, and b) graininess ≤ 1.8. The total protein isolate concentration used in this example is 20 % (Faba 1 PI concentration). The plant-based low-fat food product is prepared as in the example 5, with only difference being lemon juice concentrate of different volumes was added to the food product during initial stage of mixing (prior to heating and mixing) to achieve targeted pH. The data presented in the above table is plotted as function of pH in Figure 4. The sensorial attribute scores followed a logarithmic relation with pH and the equations displayed in Figure 4 were used to calculate the data that is marked with (*) in the above table 15.

The product performed positively for pH ranging from pH 5.5 to 7. At pH 5, the product did not perform well as the creaminess/firmness ratio and the graininess were less than 1.5 and more than 1.8 respectively.

**Rheology of food product at different pH values**

The yield stress, flow index, storage modulus and viscosity at different pH values are shown in Table 16. The yield stress for pH 5 faba 1 food product is very low, indicating that it can be easily food product with the application of a very small shear stress. Other pH food products have optimum yield stress. The flow index shows n < 1, indicating shear thinning behavior. A continuous decrease in the flow index (n) is observed with increasing pH, which seems to indicate an increase in the creaminess of food products.

A comparison between the rheological parameters with sensory firmness and work of shear from TA measurement for different pH values is shown in Figure 5. The trend of different parameters seems almost the same for all food products of protein isolates. In order to quantify a correlation between them, a statistical analysis was performed to estimate Pearson correlation coefficients with p-values, considering all studied food products, explained later.

*Table 16: Rheological profile for Faba 1 (20%) based samples at different pH values at 22$^0$C: Yield stress, and flow index are obtained from HB model fit to flow curve. G' is obtained from amplitude sweep study and viscosity is obtained from viscosity vs shear rate flow curve. The STD is extracted from the triplicate data collected for all samples*

| Samples (Faba 1 based samples at variable pH) | Yield stress ($\sigma_y$) (Pa) | G' (Pa) | Flow index (n) | Viscosity at 50 $s^{-1}$ (Pa.s) |
|---|---|---|---|---|
| pH 5 | 4.85 ± 0.14 | 115.4 ± 11.19 | 0.72 ± 0.02 | 0.20 ± 0.01 |
| pH 5.5 | 26.16 ± 0.57 | 159.46 ± 7.52 | 0.51 ± 0.01 | *0.94* ± 0.03 |
| pH 6 | 51.02 ± 1.43 | 476.34 ± 5.77 | 0.49 ± 0.01 | 1.86 ± 0.03 |
| pH 7 | 39.86 ± 2.18 | 301.23 ± 9.53 | 0.38 ± 0.02 | 2.20 ± 0.12 |

**Example 7. Production of plant-based low-fat food products using different additives**

In this example, the plant-based low-fat food product using different additives such as sunflower oil, shea butter and sugar along with plant-based protein isolates (PI) was tested for their product performance and their product composition is given below in Table 17. Faba 1 protein isolate is used in this example. The process for preparing the product is described in example 4. The sodium chloride used in this example was purchased from Mercadona supermarket. To vary the pH of the products either lemon juice concentrate (with an average °Brix of 53 and an acidity of 37%) or sodium hydroxide 1M was added in a drop-by-drop manner to the mix while stirring, 5 minutes after adding PI powder. A

commercial sunflower oil (Mercadona Hacendado, Spain) and sugar (Hacendado, Spain) was purchased from Mercadona supermarket to be used in this example. Shea butter (Beleaf 508) was obtained from Bunge®, Missouri, USA.

*Table 17. Composition of vegan food product with varying additives*

| *Faba 1 PI (%)* | 20 | | | |
|---|---|---|---|---|
| *pH* | 7.0 | | | |
| *Lemon juice concentrate (LJ) of 1M NaOH* | *0.5 NaOH* | | | |
| *Additives (%)* | *Sunflower oil (10 %)* | *Sunflower oil (15%)* | *Shea butter* (10%) | *Sugar (15%)* |
| *Water (%)* | 68.5 | 63.5 | 68.5 | 63.5 |
| *NaCl (%)* | 1 | | | |

The results of the sensory evaluation are described hereafter.

*Table 18. Sensorial attribute scores (on a scale 0-15) obtained for Faba 1 protein isolate at 20% concentration and 1% NaCl and pH7 with different concentrations of sunflower oil, shea butter and sugar. Fisher's LSD post-hoc analysis and was found to be significant at $\alpha$ < 0.01.*

| | No additives | Sunflower oil 10% | Sunflower oil 15% | Shea butter 10% | Sugar 15% |
|---|---|---|---|---|---|
| Firmness | 2.2 | 4.2 | 5.2* | 4.2 | 5.2 |
| *STD* | 1.3 | 1.6 | n.a. | 0.4 | 0.8 |
| Creaminess | 7.3 | 11.7 | 13.9* | 12 | 8.8 |
| *STD* | 2.4 | 2.6 | n.a. | 1.8 | 1.1 |
| Creaminess/Firmness | 3.3 | 2.8 | 2.7 | 2.9 | 1.7 |
| Graininess | 0.8 | 0 | 0* | 0 | 0.5 |
| *STD* | 0.8 | 0.5 | n.a. | 0 | 0 |
| * - calculated values obtained by fitting the data.<br>n.a. - not applicable. | | | | | |

The results presented in Table 18 were subjected to Fisher's LSD post-hoc analysis and was found to be significant at $\alpha$ < 0.01. More details about this statistical analysis can be found elsewhere [Williams, Lynne J., and Herve Abdi. "Fisher's least significant difference (LSD) test." Encyclopedia of research design 218.4 (2010): 840-853]. As previously explained, the selection limits set are for two factors: a) normalised creaminess (i.e. creaminess/ firmness) >_ 1.5, and b) graininess $\leq$ 1.8. The total protein isolate concentration used in this example is 20 % (Faba 1 PI). Three different types of additives were included in the product in the current example - sunflower oil (10% and 15% w/w), shea butter (10% w/w) and sugar (15% w/w). It can be noted that the sensorial attributes for the 15% sunflower oil were calculated by extrapolating the data for 0% and 10% sunflower oil. For example, the slope between 0% and 10% of sunflower oil for firmness is (4.2 - 2.2) / 10 = 0.2. Therefore for 15% sunflower oil, the firmness is given by $0.2 \times 15 + 2.2$ (*i.e.* firmness for 0% sunflower oil) = 5.2. Similarly, the creaminess score for 15% sunflower oil was calculated to be 13.9 and its graininess is taken to be 0 since 10% sunflower oil has already scored 0.

Therefore, for the current invention, addition of liquid oil (sunflower oil), solid fat (Shea butter) and sugar up to 15% (w/w) of total product had a positive impact on product performance.

**Rheology of food products with different additives**

The yield stress, flow index, storage modulus and viscosity with different additives are shown in Table 19. A significant increase in yield stresses is observed compared to no additive food product. The flow index shows n < 0.5, indicating strong shear thinning behavior for food products, which seems to indicate an increase in creaminess in such food products.

A comparison between the rheological parameters with sensory firmness and work of shear from TA measurement for different additives is shown in Figure 6. The trend of different parameters seems almost the similar for all food products of protein isolates. In order to quantify a correlation between them, a statistical analysis was performed to estimate Pearson correlation coefficients with p-values, considering all studied food products, explained below:

*Table 19: Rheological profile for Faba 1 (20%) based samples at pH 7 with different additives at 22$^0$C: Yield stress, and flow index are obtained from HB model fit to flow curve. G' is obtained from amplitude sweep study and viscosity is obtained from viscosity vs shear rate flow curve. The STD is extracted from the triplicate data collected for all samples*

| Samples (Faba 1 with different additives) | Yield stress ($\sigma_y$) (Pa) | G' (Pa) | Flow index (n) | Viscosity at 50 $s^{-1}$ (Pa.s) |
|---|---|---|---|---|
| No additives | 39.86 ± 2.18 | 301.23 ± 9.53 | 0.38 ± 0.02 | 2.20 ± 0.12 |
| Sunflower oil 10% | 87.48 ± 4.1 | 1348.87 ± 115.75 | 0.37 ± 0.02 | 4.54 ± 0.07 |
| Sunflower oil 15 % | 93.61 ± 4.01 | 1809.27 ± 96.90 | 0.33 ± 0.01 | 5.58 ± 0.05 |
| Sea butter 10% | 129.96 ± 1.71 | 1842.50 ± 29.86 | 0.47 ± 0.01 | 5.23 ± 0.10 |
| Sugar 15% | 58.54 ± 9.4 | 654.51 ± 31.79 | 0.29 ± 0.03 | 4.47 ± 0.28 |

**Correlation between Sensory evaluation and Instrumental texture parameters.**

A comparison between the sensory firmness with rheological parameters and work of shear from TA measurement for different food products is shown in Figure 7. The trend of different parameters seems almost similar for all food products of protein isolates. In order to assess possible similarity or correlations [Elie Akanny | Christina Kohlmann and. "Predicting tactile sensory attributes of personal care emulsions based on instrumental characterizations: A review." Int J Cosmet Sci. 00 (2024):1-29; and Christopher N. Schädle, Stephanie Bader-Mittermaier and Solange Sanahuja. "Characterization of Reduced-Fat Mayonnaise and Comparison of Sensory Perception, Rheological, Tribological, and Textural Analyses." Foods, 11(2022): 806] between instrumentally (rheometer and texture analyzer) collected data and the sensory attributes, a statistical analysis over all food products was employed using the Pearson correlation method with associated p-values. This method is used to investigate the similarity, direction and strength of the linear relationship between two parameters or attributes. It quantifies the strength and direction of the relationship between the variables, ranging from -1 (strong inverse correlation) to +1 (strong direct correlation). A correlation coefficient of zero indicates that there is no correlation. The Pearson correlation coefficient (PCC) reveals not only the magnitude of the correlation but also its direction. However, the correctness of the correlation depends on the sample sizes, which provide the statistically significant value by estimating the p-value. Thus, to assess the statistical significance of a correlation, one must look at the p-values that are calculated alongside the Pearson correlation coefficient. If the p-value is low (<0.05), then the correlation is statistically significant, and one can use the calculated Pearson correlation coefficient. If the p-value is not low (>0.05), then the correlation is not statistically significant, and one should not rely on the calculated Pearson correlation coefficient. Thus, the p-value helps to assess whether a correlation is genuine (statistically significant).

The formula for the calculation of Pearson correlation coefficient, r or PCC, is written as

$$r = \frac{\sum(x_i-\bar{x})(y_i-\bar{y})}{\sqrt{\sum(x_i-\bar{x})^2 \sum(y_i-\bar{y})^2}}$$

where r =correlation coefficient, $x_i$ = values of one variable of the sample, $\bar{x}$= mean value of the same; $y_i$ = values of another variable of the sample, $\bar{y}$= mean value of the another variable.

In this study, correlations of the characteristics obtained by texture and rheological analysis and attributes of the sensory evaluation were calculated. The calculated PCC values (with p-value <0.01) are tabulated in Tables 20 and 21.

*Table 20: Pearson correlation coefficient (with p value <0.01) between the sensory attributes of firmness, and creaminess and graininess, with the results of rheology, texture analysis measurements based on Faba 1 PI based foodproducts.*

| *Rheological parameters* | *Sensory firmness (score)* | *Sensory creaminess (score)* | *Sensory graininess (score)* |
|---|---|---|---|
| *Yield stress (Pa)* | 0.92 | 0.69 | -0.1 |
| *G'(Pa)* | 0.91 | 0.6 | -0.05 |

(continued)

| Rheological parameters | Sensory firmness (score) | Sensory creaminess (score) | Sensory graininess (score) |
|---|---|---|---|
| Firmness TA (g) | 0.94 | 0.74 | -0.16 |
| Work of shear TA (g.s) | 0.94 | 0.72 | -0.17 |

*Table 21: Pearson correlation coefficient (with p value <0.01) between the sensory attributes of firmness, and creaminess and graininess, with the results of rheology, texture analysis measurements for all samples presented in the examples.*

| Rheological parameters | Sensory firmness (score) | Sensory creaminess (score) | Sensory graininess (score) |
|---|---|---|---|
| Yield stress (Pa) | 0.89 | 0.52 | 0.09 |
| G' (Pa) | 0.86 | 0.54 | -0.01 |
| Firmness TA (g) | 0.89 | 0.63 | 0.01 |
| Work of shear TA (g.s) | 0.91 | 0.62 | 0.01 |

The analysis shows that sensory firmness is positively correlated (with $r > 0.85$ (p-value $< 0.01$) with instrumental parameters such as firmness_TA, work of shear_TA, yield stress, and G'.

In summary, a very high statistical correlation between different instrumental parameters and sensory attributes was observed. It ensures the correctness of instrumental texture study and strengthens the predictions of the behavior for different formulation of food products. Finally, these data also show the robustness of the sensory evaluation.

## Claims

**1.** Vegan food product comprising:

i) from 10 wt.% to 25 wt.% of a vegan protein isolate having a solubility of from 40% to 70%, wherein the solubility is determined by dispersing 1.0 wt% of said protein isolate in water with 0.5 wt% NaCl at 70°C and pH 7;
ii) optionally a fat; and
iii) water,

wherein

the weight percentages are expressed with respect to the total weight of the food product; the pH of the food product is greater than 5; and
the viscosity of the food product is from 0.02 to 25 Pa·s when subjected to a shear rate of 50 $s^{-1}$ at 22 °C.

**2.** Vegan food product according to claim 1, wherein the vegan protein isolate has a volume weighted mean diameter D [4,3] of from 10 to 130 μm, wherein said volume weighted mean diameter D[4,3] is determined by dispersing 1 wt.% of the plant-based protein ingredient in water with 0.5 wt% NaCl at 25 °C and pH 7.

**3.** Vegan food product according to claim 1 or 2, wherein the protein isolate concentration of is from 15 wt.% to 20 wt.% with respect to the total weight of the vegan food product.

**4.** Vegan food product according to any one of the preceding claims, wherein the vegan protein isolate is selected from the group consisting of legume protein isolates, including from faba beans, soybeans, peas, lentils, chickpeas, black beans, kidney beans, mung beans, pinto beans, lupin; grain protein isolates and concentrates, including from maize/com meal, millet, rice, wheat/seitan (including gluten), barley, oat, spelt, and teff; seed protein isolates, including from buckwheat, quinoa, amaranth, chia, flax, hemp, sunflower, and pumpkin; nut protein isolates, including from walnuts, almonds, and cashews; bacterial protein isolates and concentrates, including spirulina; vegetable protein isolates, including from broccoli, spinach, asparagus, artichoke, potato, sweet potato, and brussels sprouts; fruit protein isolates, including from guava, cherimoyas, blueberries, blackberries, nectarines, and bananas; fungal protein isolates, including mycoprotein; yeast protein isolates; and mixtures thereof; preferably wherein the vegan protein isolate is a faba protein isolate.

**5.** Vegan food product according to any one of the preceding claims, wherein the fat concentration is from 5 wt.% to 15 wt.% with respect to the total weight of the vegan food product.

**6.** Vegan food product according to any one of the preceding claims, wherein the fat is selected from the group consisting of olive oil, sunflower oil, peanut oil, safflower oil, sesame oil, corn oil, canola oil, soybean oil, linseed oil, castor oil, Tung oil, hemp seed oil, and almond oil, shea butter, coconut fat and mixtures thereof; preferably sunflower oil, shea butter and mixtures thereof.

**7.** Vegan food product according to any one of the preceding claims, wherein the water concentration is from 55 wt.% to 89 wt.% with respect to the total weight of the food product.

**8.** Vegan food product according to any one of the preceding claims, further comprising from 0.1 to 5 wt.% of a salt selected from the group consisting of NaCl, KCl and mixtures thereof, and/or sugar, wherein the weight percentages are expressed with respect to the total weight of the food product.

**9.** Vegan food product according to any one of the preceding claims, wherein the pH of the food product is from 5.5 to 7.

**10.** Vegan food product according to any one of the preceding claims, which comprises:

i) from 15 wt.% to 20 wt.% of a faba protein isolate having a solubility of from 40% to 60%, wherein the solubility is determined by dispersing 1.0 wt% of said protein isolate in water with 0.5 wt% NaCl at 70 °C and pH 7;
ii) from 5 wt.% to 15 wt% of a fat selected from sunflower oil, shea butter and mixtures thereof;
iii) from 60 wt.% to 80 wt% of water; and
iv) optionally from 5 to 15 wt% of sucrose;

wherein the weight percentages are expressed with respect to the total weight of the food product.

**11.** Process for the manufacture of a vegan food product according to any one of the preceding claims, wherein the process comprises:

a) dispersing the vegan protein isolate in water;
b) if necessary, adjusting the pH of the dispersion obtained in step a) to more than 5;
c) adding fat when the vegan food product comprises fat;
d) mixing while heating at 70°C to 80 °C for 5 to 10 minutes at 500 to 1000 RPM and then at 80°C to 90°C for 5 to 10 minutes at 500 to 1000 RPM; and
e) cooling the mixture obtained after step d) to 15 to 25 °C.

**12.** Vegan food product obtainable by the process according to claim 11.

**13.** Vegan food product according to any one of claims 1-10 and 12 selected from the group consisting of spreads, dips, sauces, dressings, pastes and creams; preferably selected from cheese spread, hummus, nut spread, pesto, and mayonnaise.

**14.** Process for the manufacture of a dry vegan food product comprising:

i) providing the vegan food product according to any one of claims 1-10 and 12, and
ii) drying the vegan food product provided in step i) to a water content of less than 35wt.%, with respect to the total weight of the dry food product.

**15.** Dry food product obtainable by the process of claim 14, preferably selected from a muffin and a bread-like product.

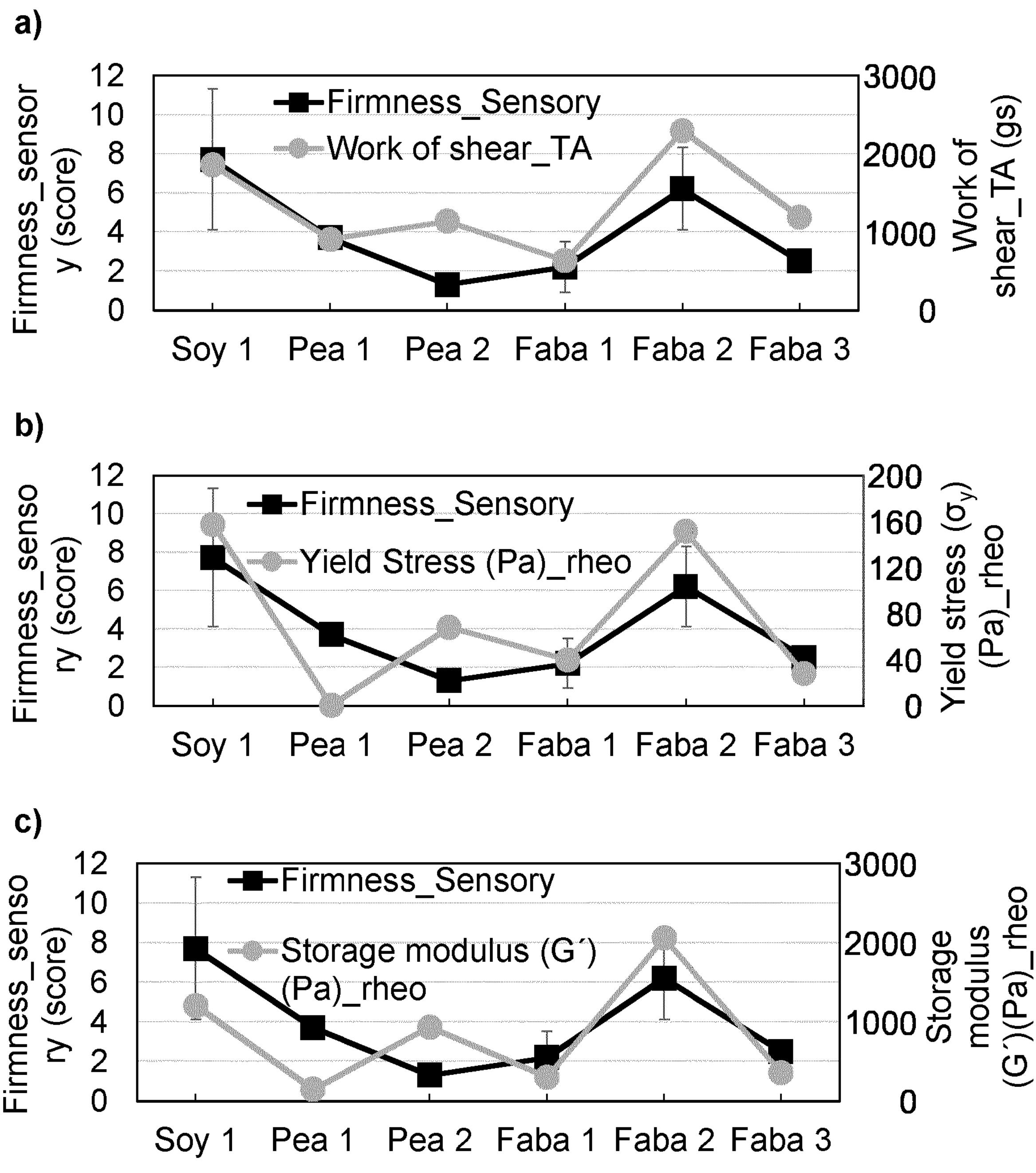
a)
Firmness_Sensory
Work of shear_TA
Firmness_sensory (score)
Work of shear_TA (gs)
Soy 1 Pea 1 Pea 2 Faba 1 Faba 2 Faba 3
b)
Firmness_Sensory
Yield Stress (Pa)_rheo
Firmness_sensory (score)
Yield stress ($\sigma_y$) (Pa)_rheo
Soy 1 Pea 1 Pea 2 Faba 1 Faba 2 Faba 3
c)
Firmness_Sensory
Storage modulus (G´) (Pa)_rheo
Firmness_sensory (score)
Storage modulus (G´)(Pa)_rheo
Soy 1 Pea 1 Pea 2 Faba 1 Faba 2 Faba 3

**FIG. 1**

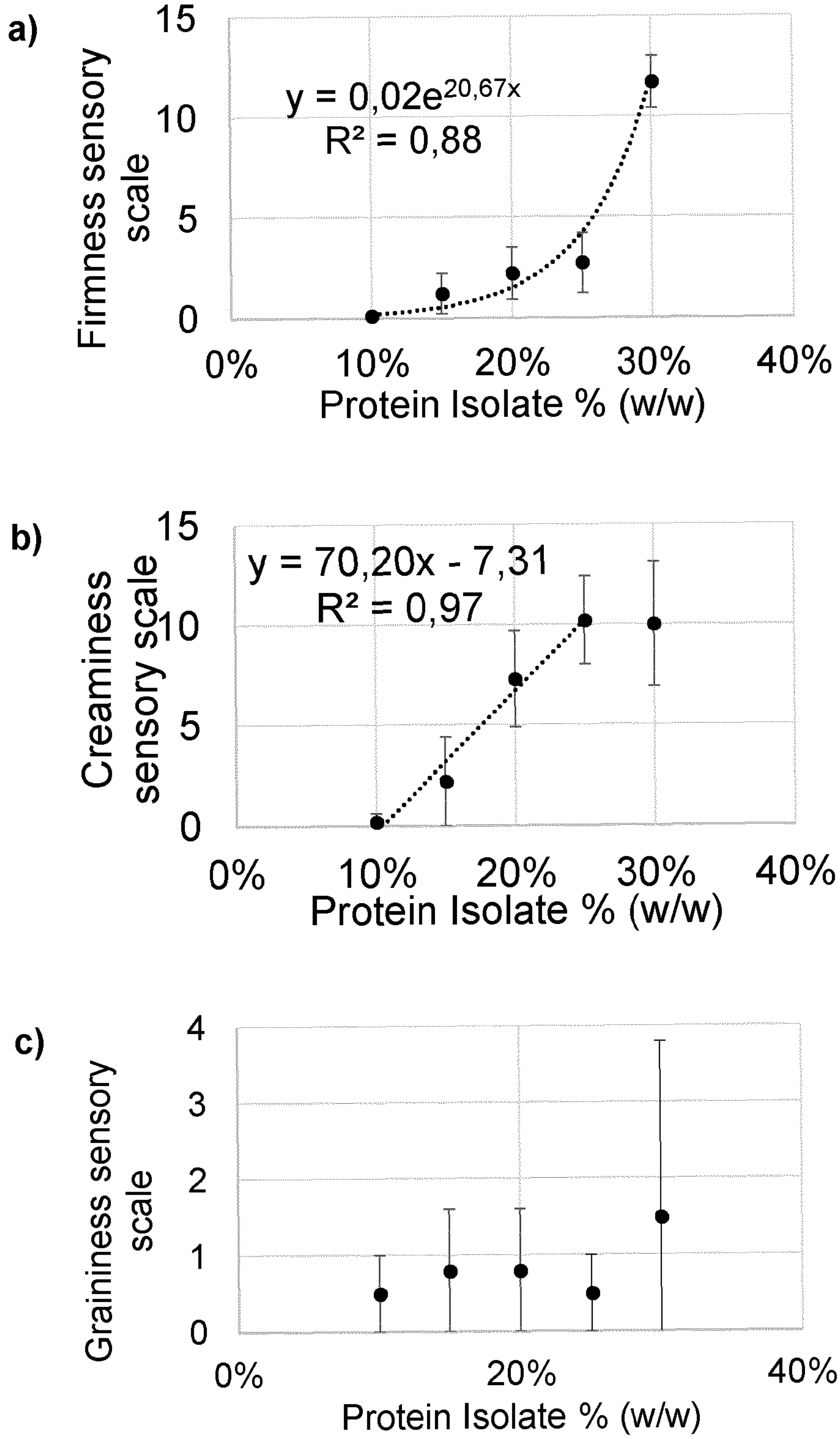
a)
15
10
5
0
Firmness sensory scale
y = 0,02e^20,67x
R² = 0,88
0%
10%
20%
30%
40%
Protein Isolate % (w/w)
b)
15
10
5
0
Creaminess sensory scale
y = 70,20x - 7,31
R² = 0,97
0%
10%
20%
30%
40%
Protein Isolate % (w/w)
c)
4
3
2
1
0
Graininess sensory scale
0%
20%
40%
Protein Isolate % (w/w)

FIG. 2

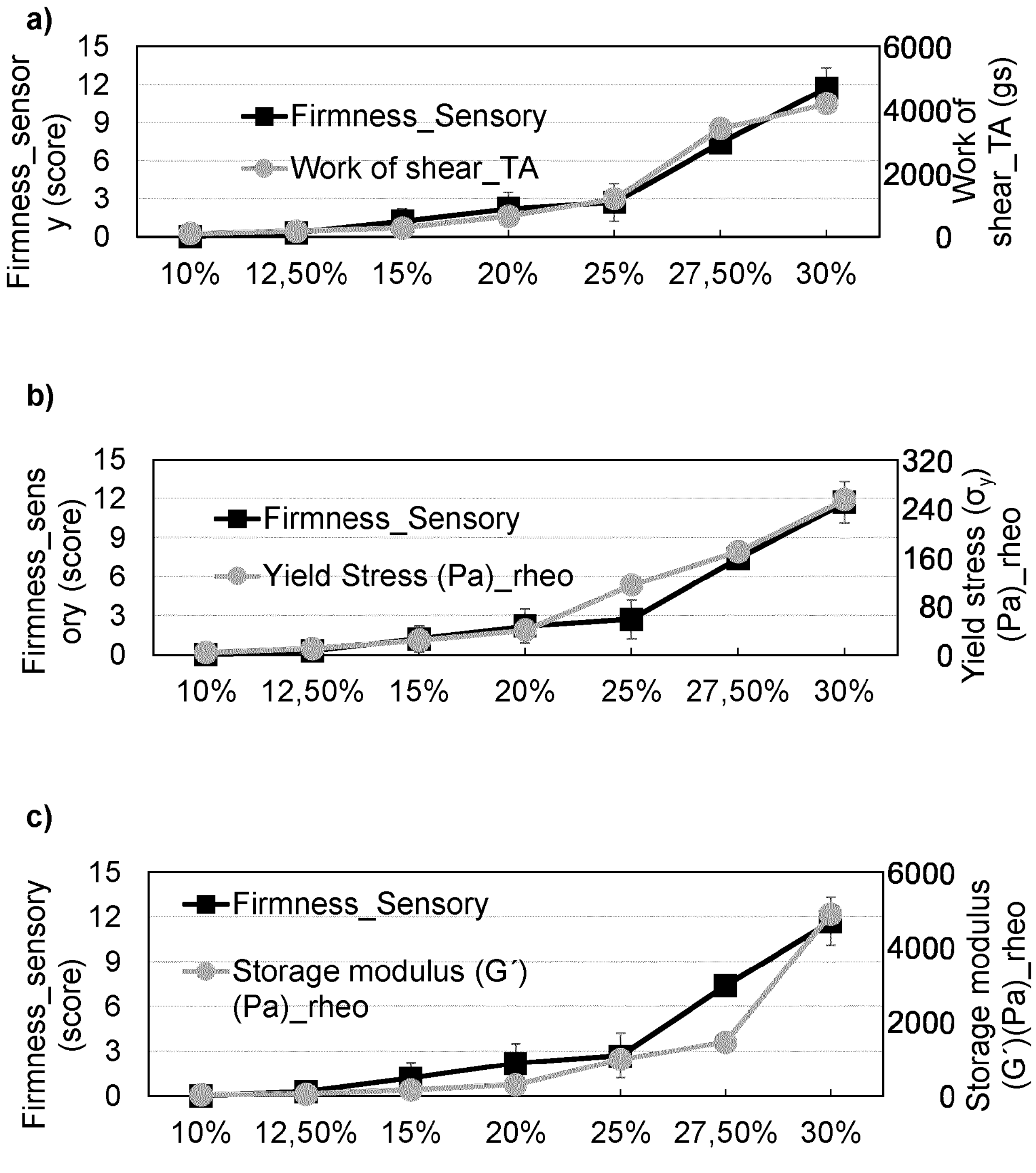

a)
Firmness_sensory (score)
Work of shear_TA (gs)
Firmness_Sensory
Work of shear_TA
15
12
9
6
3
0
6000
4000
2000
0
10%
12,50%
15%
20%
25%
27,50%
30%
b)
Firmness_sensory (score)
Yield stress ($\sigma_y$) (Pa)_rheo
Firmness_Sensory
Yield Stress (Pa)_rheo
15
12
9
6
3
0
320
240
160
80
0
10%
12,50%
15%
20%
25%
27,50%
30%
c)
Firmness_sensory (score)
Storage modulus (G´)(Pa)_rheo
Firmness_Sensory
Storage modulus (G´) (Pa)_rheo
15
12
9
6
3
0
6000
4000
2000
0
10%
12,50%
15%
20%
25%
27,50%
30%


FIG. 3

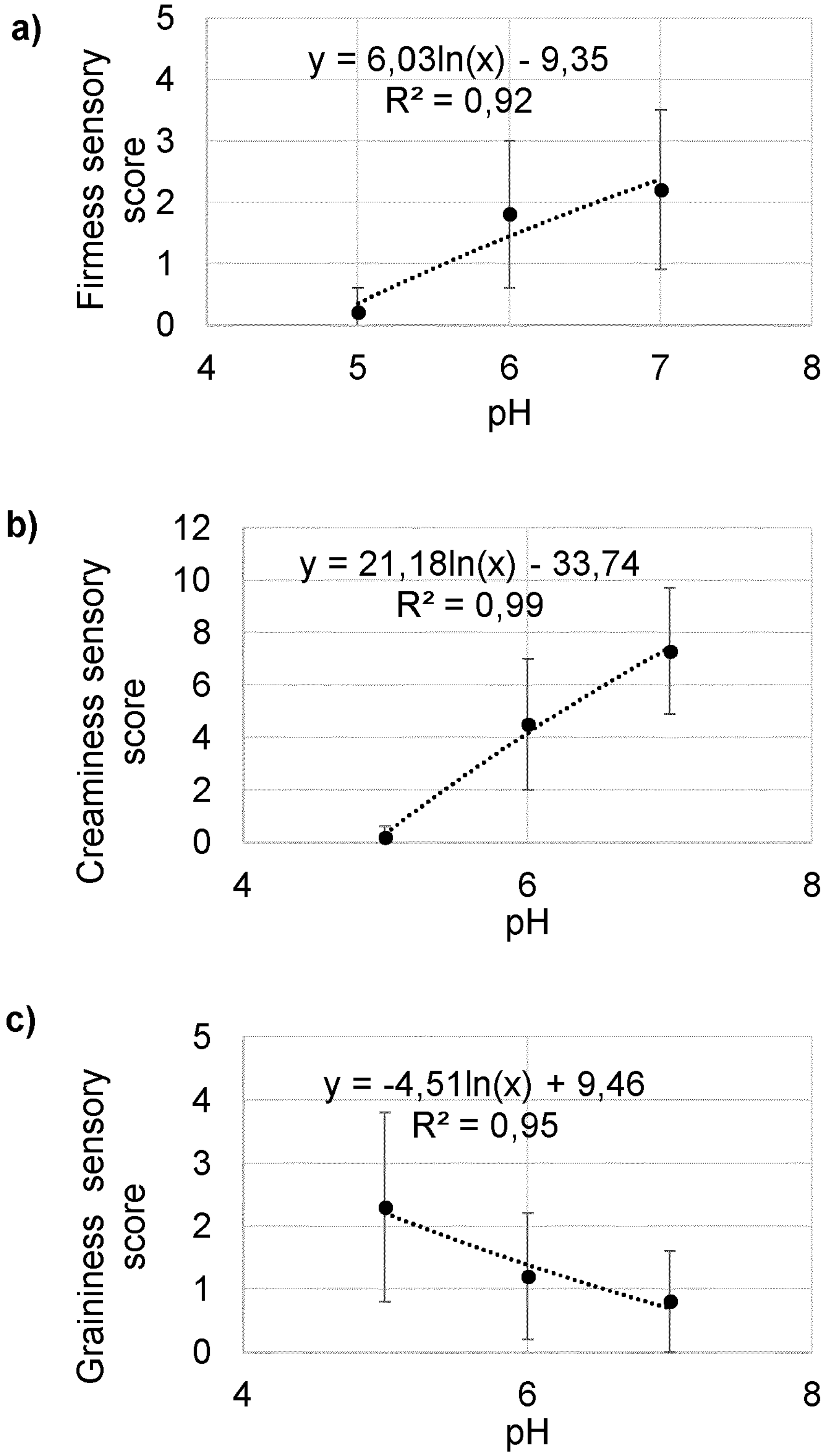
a)
5
4
3
2
1
0
Firmess sensory score
y = 6,03ln(x) - 9,35
R² = 0,92
4
5
6
7
8
pH
b)
12
10
8
6
4
2
0
Creaminess sensory score
y = 21,18ln(x) - 33,74
R² = 0,99
4
6
8
pH
c)
5
4
3
2
1
0
Graininess sensory score
y = -4,51ln(x) + 9,46
R² = 0,95
4
6
8
pH

FIG. 4

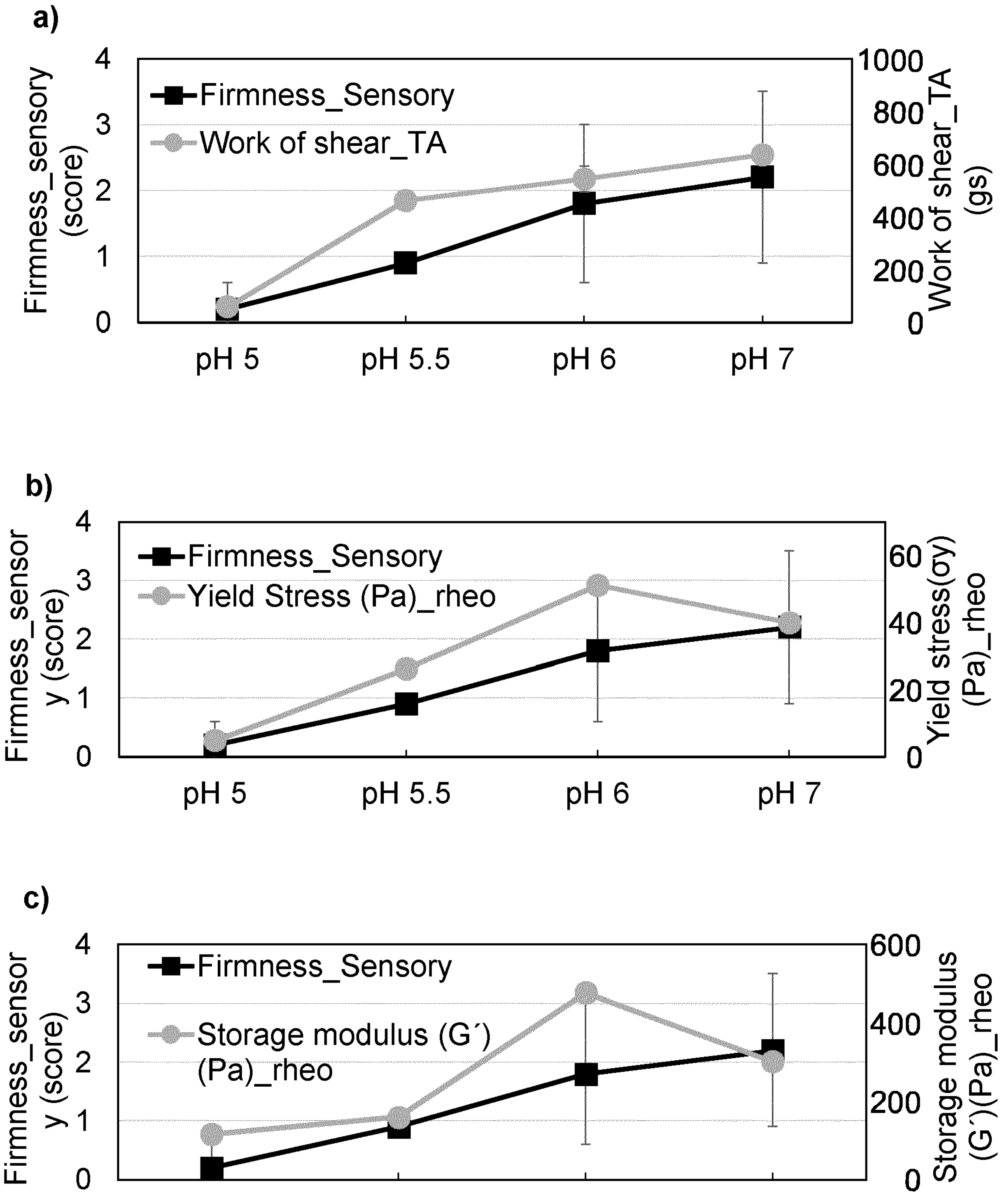
a)
Firmness_Sensory
Work of shear_TA
Firmness_sensory (score)
Work of shear_TA (gs)
0
1
2
3
4
0
200
400
600
800
1000
pH 5
pH 5.5
pH 6
pH 7
b)
Firmness_Sensory
Yield Stress (Pa)_rheo
Firmness_sensory (score)
Yield stress(σy) (Pa)_rheo
0
1
2
3
4
0
20
40
60
pH 5
pH 5.5
pH 6
pH 7
c)
Firmness_Sensory
Storage modulus (G´) (Pa)_rheo
Firmness_sensory (score)
Storage modulus (G´)(Pa)_rheo
0
1
2
3
4
0
200
400
600
pH 5
pH 5.5
pH 6
pH 7

**FIG. 5**

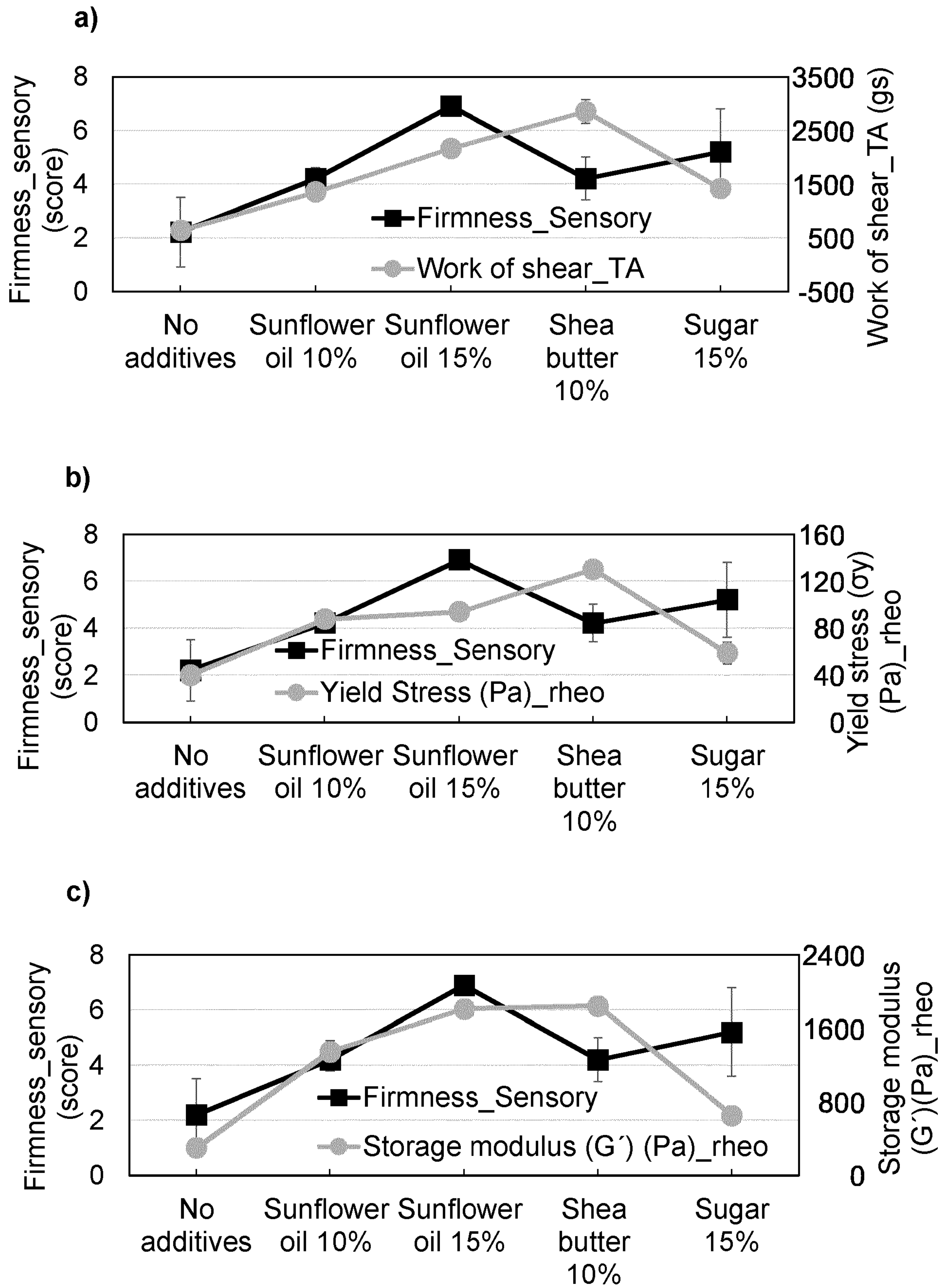
a)
Firmness_sensory (score)
Work of shear_TA (gs)
Firmness_Sensory
Work of shear_TA
8
6
4
2
0
3500
2500
1500
500
-500
No additives
Sunflower oil 10%
Sunflower oil 15%
Shea butter 10%
Sugar 15%
b)
Firmness_sensory (score)
Yield stress (σy) (Pa)_rheo
Firmness_Sensory
Yield Stress (Pa)_rheo
8
6
4
2
0
160
120
80
40
0
No additives
Sunflower oil 10%
Sunflower oil 15%
Shea butter 10%
Sugar 15%
c)
Firmness_sensory (score)
Storage modulus (G´)(Pa)_rheo
Firmness_Sensory
Storage modulus (G´) (Pa)_rheo
8
6
4
2
0
2400
1600
800
0
No additives
Sunflower oil 10%
Sunflower oil 15%
Shea butter 10%
Sugar 15%

FIG. 6

a)

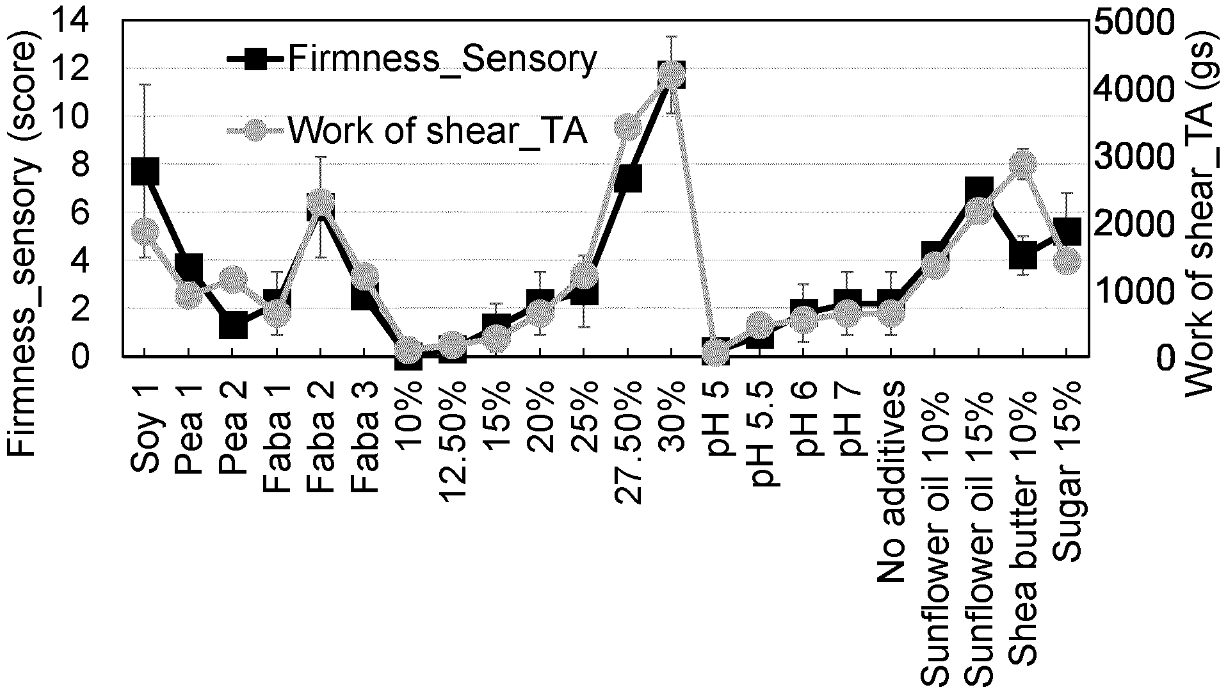
Firmness_Sensory
Work of shear_TA
Firmness_sensory (score)
Work of shear_TA (gs)
0
2
4
6
8
10
12
14
0
1000
2000
3000
4000
5000
Soy 1
Pea 1
Pea 2
Faba 1
Faba 2
Faba 3
10%
12.50%
15%
20%
25%
27.50%
30%
pH 5
pH 5.5
pH 6
pH 7
No additives
Sunflower oil 10%
Sunflower oil 15%
Shea butter 10%
Sugar 15%

b)

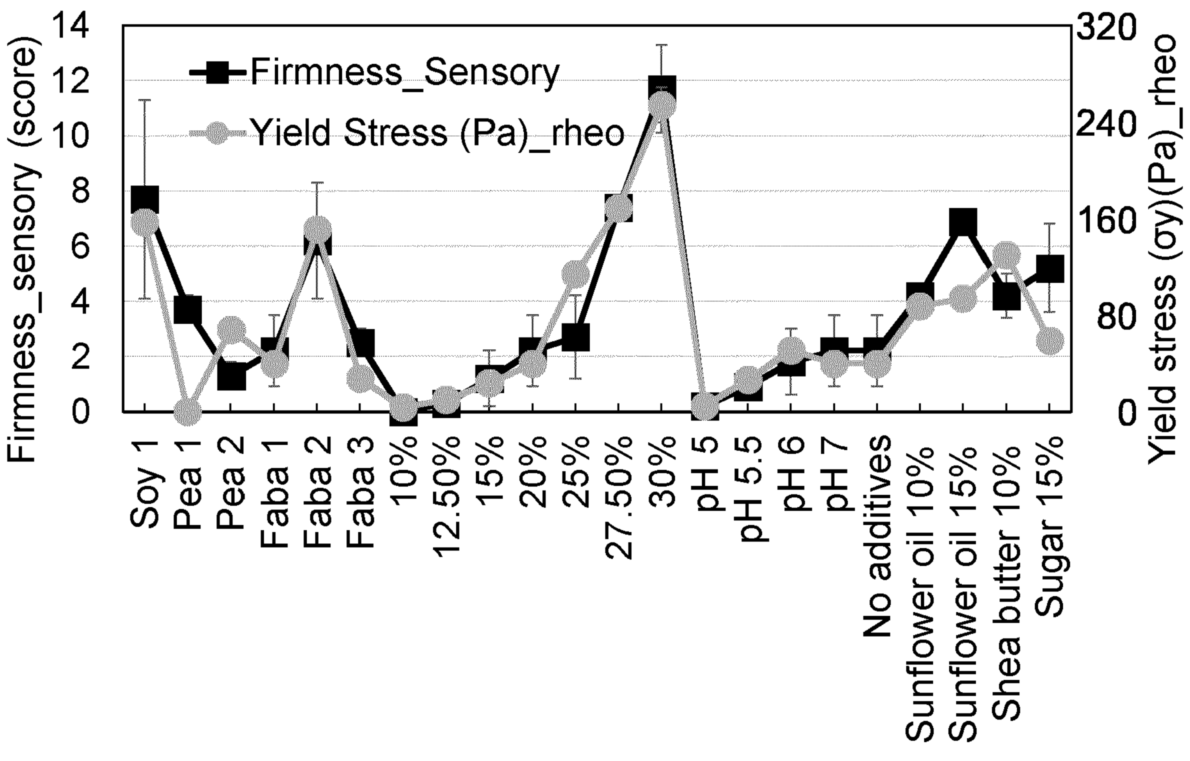
Firmness_Sensory
Yield Stress (Pa)_rheo
Firmness_sensory (score)
Yield stress (σy)(Pa)_rheo
0
2
4
6
8
10
12
14
0
80
160
240
320
Soy 1
Pea 1
Pea 2
Faba 1
Faba 2
Faba 3
10%
12.50%
15%
20%
25%
27.50%
30%
pH 5
pH 5.5
pH 6
pH 7
No additives
Sunflower oil 10%
Sunflower oil 15%
Shea butter 10%
Sugar 15%

FIG. 7

c)

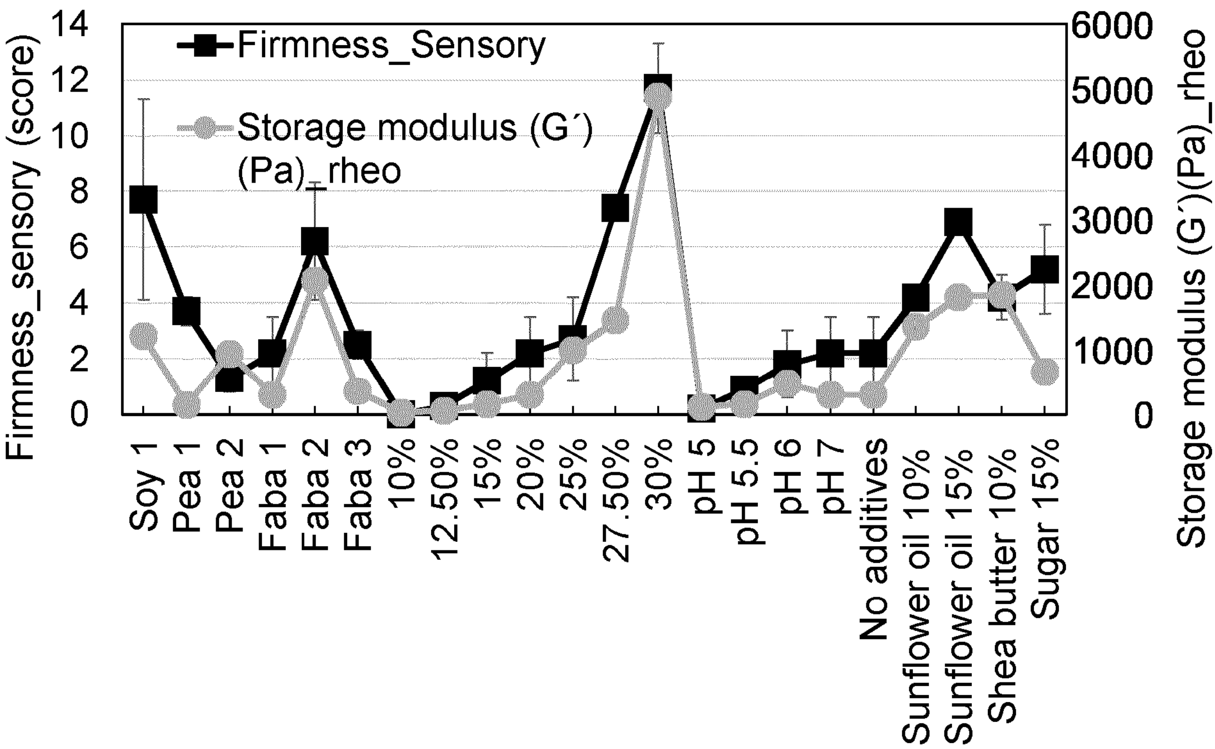
Firmness_Sensory
Storage modulus (G´) (Pa)_rheo
Firmness_sensory (score)
Storage modulus (G´)(Pa)_rheo
14
12
10
8
6
4
2
0
6000
5000
4000
3000
2000
1000
0
Soy 1
Pea 1
Pea 2
Faba 1
Faba 2
Faba 3
10%
12.50%
15%
20%
25%
27.50%
30%
pH 5
pH 5.5
pH 6
pH 7
No additives
Sunflower oil 10%
Sunflower oil 15%
Shea butter 10%
Sugar 15%

FIG. 7 (cont.)

Europäisches Patentamt
European Patent Office
Office européen des brevets

# EUROPEAN SEARCH REPORT

Application Number
EP 24 38 3343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 449 884 A1 (FOODS FOR TOMORROW S L [ES]) 23 October 2024 (2024-10-23)<br>* the whole document *<br>----- | 1-9, 12-15 | INV.<br>A21D2/26<br>A21D13/045<br>A23C20/02<br>A23L9/20<br>A23L11/00<br>A23L27/60 |
| X | CA 3 202 120 A1 (ODDLYGOOD GLOBAL OY [FI]) 9 June 2022 (2022-06-09)<br>* the whole document *<br>* examples 1,2 *<br>* tables 1,2 *<br>----- | 1,3-13 | |
| X | US 2024/138459 A1 (BARATA MANUEL [FR] ET AL) 2 May 2024 (2024-05-02)<br>* the whole document *<br>* examples 10,24 *<br>----- | 1-9, 12-15 | |
| X | US 2022/279816 A1 (PERERA CHANDANI [US]) 8 September 2022 (2022-09-08)<br>* example 6; table 11 *<br>----- | 1,4-9, 12,13 | |
| X | US 2022/322720 A1 (PATEL GAURAV [US] ET AL) 13 October 2022 (2022-10-13)<br>* the whole document *<br>* example 1; table 1 *<br>----- | 12,14,15 | TECHNICAL FIELDS SEARCHED (IPC)<br>A21D<br>A23C<br>A23L |

The present search report has been drawn up for all claims

| Place of search | Date of completion of the search | Examiner |
|---|---|---|
| The Hague | 12 May 2025 | Piret-Viprey, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 24 38 3343

This annex lists the patent family members relating to the patent documents cited in the above-mentioned European search report. The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| EP 4449884 A1 | 23-10-2024 | EP 4449884 A1 | 23-10-2024 |
| | | WO 2024218189 A1 | 24-10-2024 |
| CA 3202120 A1 | 09-06-2022 | AU 2021391734 A1 | 06-07-2023 |
| | | CA 3202120 A1 | 09-06-2022 |
| | | CN 116528692 A | 01-08-2023 |
| | | EP 4255202 A1 | 11-10-2023 |
| | | FI 20206232 A1 | 02-06-2022 |
| | | JP 2023551338 A | 07-12-2023 |
| | | US 2024381892 A1 | 21-11-2024 |
| | | WO 2022117919 A1 | 09-06-2022 |
| US 2024138459 A1 | 02-05-2024 | BR 112018015417 A2 | 18-12-2018 |
| | | CA 3011053 A1 | 03-08-2017 |
| | | CN 108601371 A | 28-09-2018 |
| | | CN 116569984 A | 11-08-2023 |
| | | EP 3407730 A1 | 05-12-2018 |
| | | EP 3571930 A1 | 27-11-2019 |
| | | ES 2998486 T3 | 20-02-2025 |
| | | ES 3002332 T3 | 06-03-2025 |
| | | JP 6974329 B2 | 01-12-2021 |
| | | JP 2019503195 A | 07-02-2019 |
| | | KR 20180103921 A | 19-09-2018 |
| | | MX 391748 B | 21-03-2025 |
| | | US 2019021387 A1 | 24-01-2019 |
| | | US 2020154753 A1 | 21-05-2020 |
| | | US 2024138459 A1 | 02-05-2024 |
| | | WO 2017129921 A1 | 03-08-2017 |
| US 2022279816 A1 | 08-09-2022 | EP 4301155 A1 | 10-01-2024 |
| | | US 2022279816 A1 | 08-09-2022 |
| | | US 2024130397 A1 | 25-04-2024 |
| | | WO 2022184317 A1 | 09-09-2022 |
| US 2022322720 A1 | 13-10-2022 | CA 3150466 A1 | 18-02-2021 |
| | | CN 114173582 A | 11-03-2022 |
| | | EP 4013242 A1 | 22-06-2022 |
| | | IL 290596 A | 01-04-2022 |
| | | JP 2022544090 A | 17-10-2022 |
| | | PH 12022550280 A1 | 12-04-2023 |
| | | US 2022322720 A1 | 13-10-2022 |
| | | WO 2021030286 A1 | 18-02-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CHIACCHIERINI, E. et al.** Milk soluble whey proteins: fast and precise determination with Dumas method.. *Analytical letters*, 2003, vol. 36 (11), 2473-2484
- **XU, RENLIANG.** Particle characterization: light scattering methods.. Springer Science & Business Media, 2001, vol. 13
- **RAO, A. V.** ; **INAAM A. BEKHEET.** Preparation of agar-agar from the red seaweed Pterocladia capillacea off the coast of Alexandria, Egypt. *Applied and environmental microbiology*, 1976, vol. 32 (4), 479-482
- **MOSSE, JACQUES**. Nitrogen-to-protein conversion factor for ten cereals and six legumes or oilseeds. A reappraisal of its definition and determination. Variation according to species and to seed protein content. *Journal of Agricultural and Food Chemistry*, 1990, vol. 38 (1), 18-24
- *Journal of Agricultural and Food Chemistry*, 1990, vol. 38 (1), 18-24
- **BERRAZAGA, INSAF et al.** Formulation, process conditions, and biological evaluation of dairy mixed gels containing faba bean and milk proteins: Effect on protein retention in growing young rats. *Journal of dairy science*, 2019, vol. 102 (2), 1066-1082
- **YAMAGATA, YOSHIE** ; **YOSHIAKI SUGAWARA**. Sensory evaluation spectrum method as a descriptive sensory analysis. *Psychology*, 2014, vol. 5 (14), 1591
- **LAURA PATRICIA MARTINEZ-PADILLA**. Rheology of liquid foods under shear flow conditions: Recently used models.. *J Texture Stud*, 2024, vol. 55, e12802
- **LAURA PATRICIA MARTINEZ-PADILLA**. Rheology of liquid foods under shear flow conditions: Recently used models. *J Texture Stud*, 2024, vol. 55, e12802
- **WILLIAMS, LYNNE J.** ; **HERVE ABDI**. Fisher's least significant difference (LSD) test. *Encyclopedia of research design*, 2010, vol. 218 (4), 840-853
- **WILLIAMS, LYNNE J.** ; **HERVE ABDI**. Fisher's least significant difference (LSD) test.. *Encyclopedia of research design*, 2010, vol. 218 (4), 840-853
- **ELIE AKANNY** ; **CHRISTINA KOHLMANN**. Predicting tactile sensory attributes of personal care emulsions based on instrumental characterizations: A review. *Int J Cosmet Sci.*, 2024, vol. 00, 1-29
- **CHRISTOPHER N. SCHÄDLE** ; **STEPHANIE BADER-MITTERMAIER** ; **SOLANGE SANAHUJA**. Characterization of Reduced-Fat Mayonnaise and Comparison of Sensory Perception, Rheological, Tribological, and Textural Analyses. *Foods*, 2022, vol. 11, 806